# EUROPÄISCHE PATENTSCHRIFT

(11) **EP 2 724 962 B1**
(45) Veröffentlichungstag und Bekanntmachung des Hinweises auf die Patenterteilung: **13.12.2017**
(21) Anmeldenummer: 13189995.7
(22) Anmeldetag: 24.10.2013
(51) Int. Cl.: B65G 39/16

(54) **Fördervorrichtung und Verfahren zum Fördern von tierischen Produkten in einem landwirtschaftlichen Betrieb**
Conveyor and method for conveying animal products in an agricultural holding
Dispositif de transport et procédé de transport de produits animaliers dans une exploitation agricole

(30) Priorität: 24.10.2012 DE 202012010170 U; 01.03.2013 DE 202013001935 U
(43) Veröffentlichungstag der Anmeldung: 30.04.2014
(73) Patentinhaber: Big Dutchman International GmbH, 49377 Vechta (DE)
(72) Erfinder: Halbritter, Lars, 49393 Lohne (DE)
(74) Vertreter: Eisenführ Speiser

(56) Entgegenhaltungen:
- EP-A1- 2 045 198
- EP-A1- 2 377 787
- EP-A2- 0 718 218
- WO-A1-2005/109111
- GB-A- 2 086 593
- JP-A- S5 889 508
- US-A1- 2005 150 747

## Beschreibung

Die Erfindung betrifft eine Fördervorrichtung zum Fördern von tierischen Produkten in einem landwirtschaftlichen Betrieb sowie eine Antriebsvorrichtung für eine solche Fördervorrichtung.
Ferner betrifft die Erfindung ein Verfahren zum Fördern von tierischen Produkten in einem landwirtschaftlichen Betrieb mittels einer Fördervorrichtung.
In landwirtschaftlichen Betrieben, insbesondere Stallanlagen werden tierische Produkte erzeugt. In modernen, hochtechnisierten Stallanlagen werden die Umgebungsbedingungen der Tiere optimiert, um eine artgerechte und gleichzeitig effiziente Produktion zu ermöglichen. Unter tierischen Produkten werden hier insbesondere Produkte aus der Geflügelhaltung verstanden, wie beispielsweise Eier oder Fleisch, z.B. auch ganze Tiere, wie etwa Broiler. Aber auch Nebenprodukte dieser Produktion, wie z.B. Tierkot, die bei der Aufzucht, Eierproduktion oder Fleischproduktion, wie Hähnchenmast, entstehen, werden hier als tierische Produkte verstanden.
Ein Bestandteil moderner Stallanlagen sind Fördervorrichtungen zum Fördern von tierischen Produkten mit einem Förderband, meist einem Endlos-Förderband, und einem Bandantrieb, der das Förderband in mindestens einer Förderrichtung antreibt. Solche Förderbänder können auch als Band- oder Gurtförderer bezeichnet werden. Sie dienen insbesondere dazu, aus verschiedenen Tierhaltungssystemen (Kleingruppe, Voliere, Käfig etc.) tierische Produkte schnell und zuverlässig ab- bzw. weiterzutransportieren.
Derartige Tierhaltungs- und Fördereinrichtungen sind in der Regel mehretagig ausgeführt, wobei die Etagen vertikal übereinander, aber auch seitlich versetzt übereinander in einer Stallanlage angeordnet sein können.
Bei Fördervorrichtungen zum Fördern von Kot kann zusätzlich vorgesehen sein, den Kot zu belüften, um ihn zu trocknen oder in separaten Trocknungsanlagen zu trocknen, in denen ebenfalls eingangs genannte Fördervorrichtungen eingesetzt werden können.
Ein Problem bei existierenden Fördervorrichtungen ist es, dass es aufgrund einer ungleichmäßigen Vorspannung und/oder einer ungleichmäßigen Belastung der Förderbänder zu einem "Verlaufen" kommen kann, bei dem ein Förderband nicht mehr exakt auf einer vorgesehenen Bahn verläuft, sondern seitlich davon abweicht. Dadurch können die Kanten der Förderbänder beispielsweise mit seitlichen Führungen in Kontakt kommen, was zum Reiben bzw. Scheuern des Förderbands und damit zu einer Beschädigung oder gar zu einer Zerstörung des Förderbands, beispielsweise durch Reißen des Förderbandes, führen kann. Eine Reparatur oder ein Austausch von Förderbändern ist in modernen Stallanlagen mit entsprechenden Tierhaltungssystemen jedoch mit erheblichem Arbeitsaufwand und einer Beeinträchtigung sowohl der Tiere als auch der Produktion verbunden.
Eine solche ungleichmäßige Belastung der Förderbänder kann insbesondere durch eine ungleichmäßige bzw. unregelmäßige Beladung der Förderbänder mit tierischen Produkten entstehen. Diese Probleme nehmen aktuell deutlich zu, da gerade moderne Haltungssysteme und eine zunehmende Bedeutung von Bodentierhaltungsanlagen mit einem größeren Bewegungsraum der Tiere eine deutlich ungleichmäßigere Verteilung, z.B. mit Kot, auf den Förderbändern bewirken. EP 2 377 787 A1 beschreibt eine gattungsgemäße Fördervorrichtung. Es ist daher eine erste Aufgabe der vorliegenden Erfindung, eine Vorrichtung und ein Verfahren zum Fördern von tierischen Produkten in einem landwirtschaftlichen Betrieb bereitzustellen, die einen oder mehrere der genannten Nachteile vermindern oder beseitigen. Insbesondere ist es eine Aufgabe der vorliegenden Erfindung, eine Vorrichtung und ein Verfahren zum Fördern von tierischen Produkten in einem landwirtschaftlichen Betrieb bereitzustellen, welche die Laufeigenschaften eines Förderbandes verbessern.

Existierende Fördervorrichtungen können abhängig von der bauartbedingten Ausführung der Bandantriebe eine maximale Zugkraft auf das Förderband ausüben. Die Masse bzw. Menge der auf dem Förderband befindlichen tierischen Produkte und der Reibbeiwert des Förderbandes gegen die abstützende Unterkonstruktion, wie Förderbandunterzüge und/oder Förderbandseitenlagerungen, wirken dieser Zugkraft entgegen. Mit steigender Beladung des Förderbandes mit tierischen Produkten kann es zu einer Überladung des Förderbandes kommen, mit der Konsequenz, dass die vom Bandantrieb auf das Förderband aufgebrachte Antriebsleistung, insbesondere Zugkraft, nicht mehr ausreicht, um das Förderband in mindestens einer Förderrichtung anzutreiben. In diesem Fall ist der Weiter- und/oder Abtransport der tierischen Produkte mittels des Förderbandes nicht mehr möglich. Gleichzeitig ist eine solche Überladung des Förderbandes auch nicht oder nur schwer umkehrbar, da die tierischen Produkte, wie beispielsweise Eier, Kot oder Masthähnchen gerade zum Abtransport auf das Förderband gelangt sind und von dort nicht zurück an ihren Ursprungsort gebracht werden können und/oder sollen.

Eine derartige Überladung kann beim Einsatz einer Fördervorrichtung zum Abtransport von Kot beispielsweise zustande kommen durch zu lange Entmistungsintervalle. In der Regel wird abhängig von der Tieranzahl der über dem Förderband befindlichen Haltungseinrichtung und damit abhängig vom Kotmassenanfall pro Tag und Meter Förderband in ganztägigen Intervallen entmistet. Dies kann beispielsweise täglich erforderlich sein. Meistens wird aber eine zweitätige, dreitätige oder n-tägige Entmistung praktiziert. Dabei wird beispielsweise die gesamte Länge der Fördereinrichtung entmistet oder jeweils eine bestimmte Teillänge z. B. ein Drittel der Länge der Fördereinrichtung. Das arbeitswirtschaftliche Interesse des Landwirts besteht in einem möglichst langen Entmistungsintervall. Die bei langen Entmistungsintervallen anfallenden Kotmengen können jedoch so groß sein, dass eine unerwünschte Überladung des Förderbands erfolgt mit der Konsequenz eines Stillstands der Fördervorrichtung.

Ein weiterer Grund aus Sicht des Landwirts für ein möglichst langes Entmistungsintervall ist, dass bei einer installierten Kotbelüftung der Kot möglichst über einen längeren Zeitraum auf dem Förderband liegend belüftet und damit getrocknet werden kann. Höhere Trockensubstanzgehalte reduzieren die Umsetzung von Harnstoffen in Ammoniak, was zur Verbesserung des Stallklimas und Reduzierung der Ammoniakemissionen in die Umwelt beiträgt. Der Trocknungseffekt reduziert die auf dem Förderband aufliegende Kotmasse, wodurch längere Entmistungsintervalle möglich werden können. Beispielsweise aufgrund von Störungen kann es jedoch erforderlich sein, in kürzeren Intervallen zu entmisten, etwa nach einer Leckage in der Wasserversorgung der Tiere. In einem solchen Fall kann Wasser auf das Förderband gelangen und dementsprechend die Kotmasse wieder erhöhen. Eine Überladung des Förderbandes zeigt sich insbesondere dadurch, dass das Förderband stillsteht, da der Bandantrieb nicht mehr in der Lage ist, das Förderband in mindestens einer Förderrichtung anzutreiben. In einer solchen Situation sind der Kot oder andere tierische Produkte dann manuell vom Förderband zu entladen.

In einem anderen Anwendungsgebiet werden Fördervorrichtungen genutzt, um ganze Tiere, beispielsweise Masthähnchen, mit Hilfe des Förderbandes abzutransportieren. Hierbei wird der Boden der Haltungsvorrichtung der Masthähnchen derart geöffnet, dass die Tiere auf das Förderband gelangen und abtransportiert werden. Eine Überladung des Förderbandes kann in diesem Einsatzgebiet insbesondere dadurch auftreten, dass die mit dem Öffnen der Böden der Haltungseinrichtungen betrauten Arbeiter mehr Tiermaterial pro Zeiteinheit auf das Förderband aufgeben, als dieses in der gleichen Zeiteinheit abtransportieren kann. Auch hier kann die Überladung des Förderbandes zur Konsequenz haben, dass die Antriebsleistung des Bandantriebs nicht mehr zum Antreiben des Förderbandes ausreicht und/oder Schlupf zwischen der Förderrolle des Bandantriebs und dem Förderband entsteht, und das Förderband manuell entladen werden muss.

Es ist daher eine zweite Aufgabe der vorliegenden Erfindung, eine Vorrichtung und ein Verfahren zum Fördern von tierischen Produkten in einem landwirtschaftlichen Betrieb bereitzustellen, die einen oder mehrere der genannten Nachteile vermindern oder beseitigen. Insbesondere ist es eine Aufgabe der vorliegenden Erfindung, eine Vorrichtung und ein Verfahren zum Fördern von tierischen Produkten in einem landwirtschaftlichen Betrieb bereitzustellen, welche eine Überladung des Förderbandes einer Fördervorrichtung verhindern oder reduzieren.

Die erste und/oder zweite Aufgabe wird erfindungsgemäß gelöst durch eine Fördervorrichtung zum Fördern von tierischen Produkten in einem landwirtschaftlichen Betrieb, umfassend ein Förderband, einen Bandantrieb zum Antreiben des Förderbands in mindestens einer Förderrichtung, einen Sensor zur Erfassung einer Abweichung einer Lage einer Kante des Förderbands, der ausgebildet und angeordnet ist, ein Abweichungssignal auszugeben, wenn die Lage der Kante des Förderbands um einen vorbestimmten Wert von einer Soll-Lage abweicht, eine Korrekturvorrichtung, die ausgebildet und angeordnet ist, in Abhängigkeit eines Korrektursignals die Ausrichtung des Bandantriebs zu verändern, eine Steuerungsvorrichtung, die ausgebildet ist, in Abhängigkeit von dem Abweichungssignal ein Korrektursignal zu generieren und an die Korrekturvorrichtung auszugeben, und die ferner ausgebildet ist, das ermittelte Maß für die Beladung des Förderbandes mit einem Sollwert zu vergleichen, gekennzeichnet durch einen zweiten Sensor zur Erfassung einer Abweichung einer Lage einer weiteren Kante des Förderbands, der ausgebildet und angeordnet ist, ein Abweichungssignal auszugeben, wenn die Lage der weiteren Kante des Förderbands um einen vorbestimmten Wert von einer Soll-Lage abweicht, wobei die Steuerungsvorrichtung ausgebildet ist, in Abhängigkeit davon, welcher der beiden Sensoren ein Abweichungssignal ausgibt, die Ausrichtung des Bandantriebs in eine erste oder eine von der ersten entgegengesetzten zweiten Richtung zu verändern.

Die Erfindung beruht auf den Merkmalen der Fördervorrichtung nach Anspruch 1 und unter anderem auf der Erkenntnis, dass eine automatische Korrektur des Förderbandverlaufs mehrere Nachteile existierender Lösungen verringert oder beseitigt und eine solche automatische Korrektur erreicht werden kann durch die vorstehend genannten Merkmale. Dabei ist vorgesehen, dass die eigentliche Korrektur eines abweichenden Förderbandverlaufs durch eine Korrekturvorrichtung erzielt wird, mit der die Ausrichtung des Bandantriebs verändert wird. Durch eine solche Veränderung der Ausrichtung des Bandantriebs kann der Förderbandverlauf so korrigiert werden, dass die Kanten des Förderbands wieder entsprechend einer Soll-Lage verlaufen. Die Ausrichtung des Bandantriebs kann dabei insbesondere eine Positionsänderung des Bandantriebs in einer Ebene parallel zur Förderrichtung sein.
Zum Ansteuern der Korrekturvorrichtung dient eine Steuerungsvorrichtung, die ein entsprechendes Korrektursignal generiert und an die Korrekturvorrichtung ausgibt. Die Steuerungsvorrichtung ist dazu vorzugsweise einerseits mit der Korrekturvorrichtung und andererseits mit einem Sensor verbunden.
Dieser Sensor dient dazu, einen von einem Soll-Verlauf des Förderbands abweichenden Verlauf zu detektieren, indem eine Abweichung der Lage einer der beiden Kanten des Förderbands erfasst wird. Sobald der Sensor eine solche Abweichung feststellt, d.h. ein Verlauf der Kante um einen bestimmten Betrag oder mehr von dem Soll-Verlauf abweicht, generiert der Sensor ein entsprechendes Abweichungssignal und gibt dieses an die Steuerungsvorrichtung aus. Der vorbestimmte Wert, um den die Lage einer Förderbandkante von einer Soll-Lage abweicht, wenn ein Abweichungssignal erzielt wird, beträgt vorzugsweise weniger als 20 Millimeter, beispielsweise insbesondere beim Einsatz von Gabellichtschranken zwischen 10 und 20 Millimeter, insbesondere 11, 12, 13, 14, 15, 16, 17, 18, oder 19 Millimeter. Beim Einsatz von induktiven und/oder Ultraschallsensoren können auch vorbestimmte Werte von weniger als 10 Millimetern bevorzugt sein, beispielsweise 1, 2, 3, 4, 5, 6, 7, 8 oder 9 Millimeter.

Die Eignung der Fördervorrichtung zum Fördern von tierischen Produkten in einem landwirtschaftlichen Betrieb bedingt, dass die gesamte Fördervorrichtung, insbesondere auch ihre einzelnen Elemente, für die hohen Anforderungen in einer Stallanlage ausgebildet sind. So ist beispielsweise die Belastung durch Verunreinigungen, wie Staub, Kot oder Federn, in einer Stallanlage sehr hoch, ebenso wie die Anforderungen an Chemikalienbeständigkeit, beispielsweise gegenüber bei der Reinigung von Stallanlagen eingesetzten Reinigungs- oder Desinfektionsmitteln. Ferner ist beim Fördern von tierischen Produkten in einem landwirtschaftlichen Betrieb davon auszugehen, dass das Förderband selbst, insbesondere auch seine Kanten, mit den tierischen Produkten und/oder Verschmutzungen beladen ist. Dies stellt insbesondere hohe Anforderungen an geeignete Sensoren zur Erfassung einer Abweichung der Lage einer Kante des Förderbands, da zum einen der Sensor bzw. eine Detektionsfläche des Sensors selbst verschmutzen kann und ferner auch die zu erfassende Kante des Förderbands verschmutzt oder mit tierischen Produkten beladen sein kann.

Die hier beschriebene Fördervorrichtung hat den Vorteil, dass die Lage der Kante des Förderbands kontinuierlich oder in regelmäßigen Abständen automatisch erfasst werden kann und bei einer Lageabweichung direkt eine automatische Korrektur ausgeführt werden kann, sodass ein längerer Kontakt des laufenden Förderbands mit Seitenführungen oder anderen Elementen und eine dementsprechende Beschädigung oder Zerstörung des Förderbands verringert oder sogar ganz vermieden werden kann.

Eine Korrektur des Förderbandverlaufs über eine Veränderung der Ausrichtung des Bandantriebs hat ferner den Vorteil, dass die Korrektur des Förderbandverlaufs unabhängig vom Beladungszustands des Förderbands erfolgen kann., d.h. auch bei einem mit tierischen Produkten beladenen Förderband.

Vorzugsweise ist der Bandantrieb als beidseitig gelagerte, angetriebene Antriebsrolle ausgebildet. Dabei ist ferner bevorzugt, dass die Korrekturvorrichtung ausgebildet und angeordnet ist, die Ausrichtung des Bandantriebs über eine Positionsveränderung, insbesondere eine horizontale Verschiebung in oder entgegen der Förderrichtung, eines Lagers des Bandantriebs zu verändern.

Ein Endlos-Förderband mit einem Obertrum, auf dem tierische Produkte gefördert werden, und mit einem Untertrum weist beispielsweise auf der Ausförderseite eine Antriebsrolle auf und auf der gegenüberliegenden Seite eine Umlenkrolle. Das Förderband kann mit Hilfe von Andruckrollen an die Antriebsrolle gedrückt werden, sodass eine hohe Anpresskraft und dadurch eine entsprechende Reibung zwischen dem Förderband und der Antriebsrolle entsteht und das Förderband durch die Drehung der Antriebsrolle in mindestens einer Förderrichtung angetrieben wird. Die Antriebsrolle ist vorzugsweise beidseitig gelagert, beispielsweise in einem Antriebsgehäuse. Ferner können Abstreifer an der Antriebsrolle vorgesehen sein, die zur Reinigung des Förderbandes dienen. Vorzugsweise kann das Förderband in mehr als einer Förderrichtung angetrieben werden, beispielsweise in zwei einander entgegengesetzten Förderrichtungen. Der Bandantrieb, insbesondere eine Antriebsrolle, kann dazu vorzugsweise ausgebildet sein, in entsprechend verschiedene Richtungen drehen zu können. Es können auch mehr als ein Bandantrieb vorgesehen sein, insbesondere Förderbänder für Kot können mehrere Bandantriebe aufweisen.

Für eine Positionsveränderung eines Lagers des Bandantriebs kann ein Verstellmechanismus vorgesehen sein, beispielsweise in Form einer Verstellplatte oder Schieberplatte, zur Aufnahme eines Lager des Bandantriebs. Dieser Verstellmechanismus wird dann durch die Korrekturvorrichtung derart bewegt, dass eine Positionsveränderung des Lagers des Bandantriebs eintritt, wodurch die gewünschte Verlaufskorrektur des Förderbandes erzielt werden kann.

Insbesondere kann vorgesehen sein, dass die Korrekturvorrichtung einen Linearantrieb aufweist, mit dem die Positionsveränderung eines Lagers des Bandantriebs erzeugt werden kann, insbesondere eine horizontale Verschiebung in oder entgegen der Fördervorrichtung. Die Korrekturvorrichtung kann beispielsweise als Getriebemotor umgesetzt sein, vorzugsweise mit einer Trapezgewindespindel und einer Flanschplatte mit einem entsprechenden Innengewinde.

In einer bevorzugten Fortbildung kann der Sensor als optischer, akustischer, mechanischer, kapazitiver oder induktiver Sensor ausgebildet sein. Ferner kann der Sensor ausgebildet sein, ein digitales oder ein analoges Abweichungssignal auszugeben. Ein als Ultraschalldetektor ausgebildeter akustischer Sensor verfügt beispielsweise über einen analogen Signalausgang, während induktive oder optische Sensoren ein digitales Signal liefern. Bevorzugt ist insbesondere auch die Ausbildung des Sensors auf Basis der Lasertechnik, beispielsweise als Lichtschranke. Ein mechanischer Sensor kann beispielsweise als Taster ausgebildet sein.

Besonders bevorzugt ist der Einsatz einer Gabellichtschranke als Sensor mit einem Rotlichtlaser als Sensor und einer Fotodiode als Empfänger. Ein solcher Sensor ist besonders robust und verschmutzungsunempfindlich und daher insbesondere für den vorliegenden Anwendungsbereich geeignet.

Ferner kann bevorzugt sein, dass das Förderband im Bereich der Kante eine, vorzugsweise fortlaufende, Markierung aufweist und der Sensor ausgebildet ist, eine Abweichung der Kante des Förderbands anhand der Markierung zu bestimmen. Beispielsweise kann die Markierung als, vorzugsweise parallel zur Kante verlaufendes, Metallband ausgebildet sein, das geeignet ist, von einem induktiven Sensor erkannt zu werden. Eine solche Ausgestaltung hat den Vorteil, dass eine Abweichung besonders genau erkannt werden kann und ferner ein Sensor eine Abweichung in unterschiedliche Richtungen erfassen kann.

In einer weiteren bevorzugten Fortbildung ist vorgesehen, dass der Sensor derart angeordnet ist, dass eine Detektionsfläche des Sensors geneigt angeordnet ist. Insbesondere ist eine Neigung, vorzugsweise zur Horizontalen, um mindestens 10 Grad, mindestens 20 Grad, mindestens 30 Grad, mindestens 40 Grad, mindestens 45 Grad, mindestens 50 Grad, mindestens 60 Grad, mindestens 70 Grad, oder mindestens 80 Grad bevorzugt. Ferner kann auch eine maximale Neigung, vorzugsweise zur Horizontalen, von maximal 10 Grad, maximal 20 Grad, maximal 30, maximal 40 Grad, maximal 45 Grad, maximal 50 Grad, maximal 60 Grad, maximal 70 Grad oder maximal 80 Grad zur Horizontalen bevorzugt sein. Besonders bevorzugt sind Neigungsbereiche, die sich aus den verschiedenen möglichen Kombinationen von minimalen und maximalen Neigungsgrenzen wie zuvor benannt ergeben. Insbesondere bevorzugt ist eine Neigung in einem Bereich von 25 bis 65 Grad, insbesondere zwischen 30 und 60 Grad.

Eine solche geneigte Sensoranordnung ist insbesondere deshalb vorteilhaft, da bei einer Neigung des Sensors, insbesondere der Detektionsfläche des Sensors, Verschmutzungen leichter von der Detektionsfläche gleiten bzw. schlechter an dieser anhaften können und somit die Detektionsfläche geringer bzw. langsamer verschmutzt. Eine solche geneigte Sensoranordnung ist insbesondere bei der Ausgestaltung des Sensors als Gabellichtschranke bevorzugt.

Ferner ist vorzugsweise vorgesehen, dass in Förderrichtung vor dem Sensor eine Schutzvorrichtung, insbesondere ein Schmutzabstreifer, zur Reduzierung der Verunreinigung einer Detektionsfläche des Sensors angeordnet ist. Auf diese Weise kann zusätzlicher Eintrag von Schmutz und/oder tierischen Produkten auf den Sensor und insbesondere auf die Detektionsfläche des Sensors verringert oder verhindert werden.

Gemäß einer weiteren bevorzugten Ausgestaltung ist die Steuerungsvorrichtung ausgebildet, solange ein Korrektursignal zu generieren, bis kein Abweichungssignal mehr ausgegeben wird.

Die automatische Korrektur des Förderbandverlaufs erfolgt somit vorzugsweise in einem geschlossenen Kreislauf, in dem die Steuerungsvorrichtung bei Empfang eines Abweichungssignals ein Korrektursignal ermittelt und die Ausrichtung des Bandantriebs entsprechend korrigiert und - sofern ein weiteres Abweichungssignal vorliegt - wieder ein Korrektur generiert und an die Korrekturvorrichtung zur Veränderung der Ausrichtung des Bandantriebs ausgibt. Sobald das Förderband wieder gemäß der Soll-Lage verläuft und kein Abweichungssignal mehr ausgegeben wird, wird auch kein Korrektursignal generiert und damit auch erfolgt keine Veränderung der Ausrichtung des Bandantriebs. Erst wenn wieder ein weiteres Abweichungssignal generiert wird, erfolgt eine erneute Ermittlung und Ausgabe eines Korrektursignals und einer entsprechenden Änderung der Ausrichtung des Bandantriebs mittels der Korrekturvorrichtung.

Insbesondere kann vorgesehen sein, dass die Steuerungsvorrichtung ausgebildet ist, nach der Generierung und Ausgabe eines Korrektursignals für einen vorbestimmten Zeitraum kein Abweichungssignal zu empfangen. Dies hat den Vorteil, dass nach der Ausgabe eines Korrektursignals an die Korrekturvorrichtung und einer entsprechende Veränderung der Ausrichtung des Bandantriebs für einen vorbestimmten Zeitraum, beispielsweise 0 bis 30 Minuten, insbesondere 15 Minuten, abgewartet werden kann, bis sich aufgrund der Änderung der Ausrichtung des Bandantriebs ein veränderter Förderbandverlauf eingestellt hat. Erst wenn sich nach Ablauf des bestimmten Zeitraums herausstellt, dass die Veränderung der Ausrichtung des Bandantriebs noch nicht ausgereicht hat, um das Förderband wieder in die Soll-Lage zurückzuführen, wird ein erneutes Abweichungssignal empfangen und dementsprechend auch ein erneutes Korrektursignal generiert und ausgegeben.

Ferner ist bevorzugt, dass die Steuerungsvorrichtung ausgebildet ist, ein Freigabesignal zu empfangen und erst nach Erhalt des Freigabesignals den Empfang von Abweichungssignalen sowie die Generierung aus Ausgabe von Korrektursignalen aufzunehmen.

In einer weiteren bevorzugten Ausgestaltung ist die Korrekturvorrichtung ausgebildet, pro Korrektursignal die Ausrichtung des Bandantriebs um einen vorbestimmten Wert in einer ersten und/oder einer zweiten, zur ersten entgegengesetzten Richtung zu verändern. Dies kann beispielsweise über eine vorgegebenen Zeit für die Zustellzeit eines Motors, beispielsweise über eine vorgegebene Motordrehzeit, der Korrekturvorrichtung erfolgen.

Ferner ist eine Begrenzung der maximalen Veränderung der Ausrichtung des Bandanatriebs in einer ersten und/oder einer zweiten, zur ersten entgegengesetzten Richtung bevorzugt. Auf diese Weise kann sichergestellt werden, dass auch bei mehrfach wiederholter oder dauerhafter Ausgabe von Abweichungssignalen, beispielsweise aufgrund eines stark verschmutzten oder defekten Sensors, die Ausrichtung des Bandantriebs nur um einen maximalen Wert verändert wird, um eine Übersteuerung zu verhindern.
Eine besonders bevorzugte Sensoranordnung ist gegeben, wenn der Sensor derart beabstandet von der Soll-Lage der Kante angeordnet ist, dass das Abweichungssignal generiert wird, wenn der Sensor das Eintreten der Kante des Förderbands in einen Detektionsbereich detektiert. Bei der Verwendung einer Gabellichtschranke als Sensor kann dies beispielsweise dadurch umgesetzt sein, dass die Gabellichtschranke so montiert ist, dass im Soll-Verlauf das Förderband, insbesondere die Kante des Förderbands, nicht detektiert wird. Erst wenn der Verlauf des Förderbands vom Soll-Verlauf abweicht, gelangt die Kante des Förderbands in den Detektionsbereich und ein Abweichungssignal wird generiert.
Eine alternative Sensoranordnung besteht darin, dass der Sensor derart angeordnet ist, dass das Abweichungssignal generiert wird, wenn der Sensor das Austreten der Kante des Förderbandes aus einen Detektionsbereich detektiert.
In dieser Anordnung detektiert der Sensor das Förderband in seiner Soll-Lage und gibt erst dann ein Abweichungssignal aus, wenn sich der Verlauf des Förderbands soweit geändert hat, dass im Detektionsbereich des Sensors keine Kante des Förderbands detektiert werden kann.
Bei Verwendung eines Ultraschallsensors mit einem analogen Abweichungssignal kann eine bevorzugte Sensoranordnung so gestaltet sein, dass beim Soll-Verlauf des Förderbandes eine Hälfte des Detektionsbereichs des Ultraschallsensors bedeckt ist. Das analoge Abweichungssignal enthält in dieser Variante die Information, ob sich die Förderbandkante in die eine oder andere Richtung aus der Mitte des Detektionsbereichs heraus bewegt. Erfindungsgemäß umfasst die Fördervorrichtung einen zweiten Sensor zur Erfassung einer Abweichung einer Lage einer weiteren Kante des Förderbands, der ausgebildet und angeordnet ist, ein Abweichungssignal auszugeben, wenn die Lage der weiteren Kante des Förderbands um einen vorbestimmten Wert von einer Soll-Lage abweicht.

Ein solcher zweiter Sensor ist vorzugsweise in seinen Funktionalitäten und Vorteilen wie der zuvor beschriebene Sensor oder einer seiner Fortbildung ausgebildet. Dabei können der erste und zweite Sensor gleich ausgebildet sein oder unterschiedlich. Insbesondere bevorzugt ist eine Variante mit zwei Gabellichtschranken als Sensoren, die auf gleicher Höhe auf den beiden gegenüberliegenden Seiten des Förderbands derart angeordnet sind, dass bei einer Soll-Lage des Förderbands keine Kante detektiert wird.
Ferner ist eine Ausgestaltung bevorzugt, bei der die Steuerungsvorrichtung ausgebildet ist, eine Fehlermeldung auszugeben, wenn der erste und der zweite Sensor ein Abweichungssignal ausgeben. Dies ist insbesondere mit der zuvor beschriebenen Variante von zwei Gabellichtschranken bevorzugt, die jeweils nur bei von der Soll-Lage abweichendem Verlauf eine Kante des Förderbands detektieren. Auf diese Weise kann sichergestellt werden, dass bei einer Abweichung des Verlaufs des Förderbandes bei korrekter Funktion der Fördervorrichtung und ihrer Elemente nur einer der beiden Sensoren ein Abweichungssignal geniert. Wenn beide Sensoren in einem solchen Fall ein Abweichungssignal ausgeben, deutet dies auf eine Störung im System hin, beispielsweise einen fehlerhaften oder verschmutzten Sensor oder ein gerissenes Förderband. In einem solchen Fall ist daher vorzugsweise vorgesehen, dass die Steuerungsvorrichtung eine Fehlermeldung generiert und ausgibt. Ferner kann vorgesehen sein, dass in einem solchen Fall eine Veränderung der Ausrichtung des Bandantriebs unterbleibt und/oder die Fördervorrichtung gestoppt wird. Erfindungsgemäß ist die Steuerungsvorrichtung dazu ausgebildet, in Abhängigkeit davon, welcher der beiden Sensoren ein Abweichungssignal ausgibt, die Ausrichtung des Bandantriebs in eine erste oder eine von der ersten entgegengesetzten zweiten Richtung zu verändern.
Beim Vorsehen von zwei Sensoren, insbesondere zwei gegenüberliegenden Gabellichtschranken, kann in besonders einfacher Weise bestimmt werden, in welche Richtung die Ausrichtung des Bandantriebs verändert werden muss, um den Förderbandverlauf zu korrigieren.
Eine besonders bevorzugte Fortbildungsform ist ferner dadurch gekennzeichnet, dass zwei, drei oder mehrere Förderbänder mit jeweils einem Bandantrieb, einem Sensor und einer Korrekturvorrichtung vorgesehen sind, wobei die zwei, drei oder mehreren Förderbänder vorzugsweise vertikal übereinander und/oder horizontal versetzt zueinander angeordnet sind.

Insbesondere in hochtechnisierten Stallanlagen mit modernen Tierhaltungssystemen ist meist eine Vielzahl von Förderbändern erforderlich, um die tierischen Produkte, insbesondere verschiedene tierische Produkte, wie beispielsweise Eier und Kot in der Hühnerhaltung, zu fördern. Eine besonders kompakte und platzsparende Anordnung ist daher eine Fördervorrichtung, bei der mehrere Förderbänder in vertikaler Richtung übereinander angeordnet sind. Besonders bevorzugt ist beispielsweise eine Ausgestaltung, bei der mehrere Förderbänder exakt vertikal übereinander angeordnet sind und auch die Bandantriebe sowie die Korrekturvorrichtungen vertikal übereinander angeordnet sind, wobei beispielsweise die Bandantriebe und Korrekturvorrichtungen an einem gemeinsamen Antriebsgestell angeordnet sein können. Ferner ist es möglich, mehrere Förderbänder horizontal versetzt zueinander anzuordnen. Die Förderbänder können dabei in einer horizontalen Ebene nebeneinander angeordnet sein oder aber vertikal übereinander, jedoch zusätzlich mit einem horizontalen Versatz zueinander. Je nach Layout der Stallanlage und der Haltungssysteme können unterschiedliche Anordnungen der Förderbänder und Bandantriebe der Fördervorrichtung bevorzugt sein.
Insgesamt ist es bevorzugt, dass die mehreren Förderbänder jeweils gemäß einer oder mehrerer der zuvor beschriebenen Fortbildungen ausgebildet ist, ebenso wie der jeweilige Bandantrieb, der jeweilige Sensor und gegebenenfalls ein zweiter Sensor sowie die jeweilige Korrekturvorrichtung. Ferner kann jedem der mehreren Förderbänder eine eigene Steuerungsvorrichtung zugeordnet sein. Alternativ können einige oder alle der Förderbänder über eine gemeinsame Steuerungsvorrichtung angesteuert werden. Erfindungsgemäß umfasst die Fördervorrichtung eine Messeinrichtung, die ausgebildet und angeordnet ist, ein Maß für eine Beladung des Förderbandes zu ermitteln.

Unter einer Überladung des Förderbandes einer Fördervorrichtung wird hier ein Zustand verstanden, bei dem die Masse und/oder Menge an tierischen Produkten auf dem Förderband so groß ist, dass die Antriebsleistung des Bandantriebs nicht mehr ausreicht, um das Förderband in mindestens einer Förderrichtung anzutreiben. Unter Beladung des Förderbandes werden hier tierische Produkte verstanden, die auf das Förderband aufgegeben wurden (beispielsweise durch Mitarbeiter auf das Förderband aufgelegt wurden oder beispielsweise durch Schwerkrafteinwirkung auf das Förderband gefallen sind) und sich zum Ab- und/oder Weitertransport auf dem Förderband befinden.

Das Förderband ist vorzugsweise als Endlos-Förderband mit einem Obertrum, auf dem tierische Produkte gefördert werden, und mit einem Untertrum ausgebildet und weist beispielsweise auf der Ausförderseite einen Bandantrieb mit einer Antriebsrolle auf und auf der gegenüberliegenden Seite eine Umlenkrolle. Das Förderband kann mit Hilfe von Andruckrollen an die Antriebsrolle gedrückt werden, so dass eine hohe Anpresskraft und dadurch eine entsprechende Reibung zwischen dem Förderband und der Antriebsrolle entsteht und das Förderband durch die Drehung der Antriebsrolle in mindestens einer Förderrichtung angetrieben wird. Vorzugsweise ist der Bandantrieb als beidseitig gelagerte, angetriebene Antriebsrolle ausgebildet. Die Lager sind vorzugsweise in einem Antriebsgehäuse und/oder an einem Seiten- bzw. Antriebsgestell angeordnet. Ferner können Abstreifer an der Antriebsrolle vorgesehen sein, die zur Reinigung des Förderbandes dienen. Vorzugsweise kann das Förderband in mehr als einer Förderrichtung angetrieben werden, beispielsweise in zwei einander entgegengesetzten Förderrichtungen. Der Bandantrieb, insbesondere eine Antriebsrolle, kann dazu vorzugsweise ausgebildet sein, in entsprechend verschiedene Richtungen drehen zu können. Es können auch mehrere Bandantriebe vorgesehen sein, insbesondere Förderbänder für Kot können mehretagig mit mindestens einem Bandantrieb pro Etage ausgebildet sein.

Für eine Positionsveränderung eines Lagers des Bandantriebs kann ein Verstellmechanismus vorgesehen sein, beispielsweise in Form einer Verstellplatte, zur Aufnahme eines Lagers des Bandantriebs. Wie zuvor beschrieben ist, kann dieser Verstellmechanismus beispielsweise durch eine Korrekturvorrichtung derart bewegt werden, dass eine Positionsveränderung des Lagers des Bandantriebs eintritt, wodurch eine gewünschte Verlaufskorrektur des Förderbandes erzielt werden kann.

Diese Weiterbildung beruht unter anderem auf der Erkenntnis, dass zur Verhinderung einer Überladung des Förderbandes zunächst die Kenntnis über ein Maß für die Beladung des Förderbandes erforderlich ist. Es ist daher vorgesehen, die Fördervorrichtung mit einer Messeinrichtung zu versehen, mit der ein solches Maß für eine Beladung des Förderbandes ermittelt werden kann. Als Maß für eine Beladung des Förderbandes wird hier eine Größe verstanden, aus der (direkt oder indirekt) Rückschlüsse auf eine, vorzugsweise aktuelle, Beladung des Förderbandes gezogen werden können. Die Messeinrichtung ermittelt vorzugsweise einen im Zeitpunkt der Ermittlung aktuellen Wert für das Maß für die Beladung des Förderbandes.

Die Kenntnis eines Maßes für die Beladung des Förderbandes, insbesondere die aktuelle Beladung des Förderbandes, ermöglicht es überhaupt erst, vor dem tatsächlichen Eintritt des Überladungsfalles, der sich eben durch einen Stillstand des Förderbandes zeigt, einzugreifen und eine solche Überladung möglichst zu verhindern. Auf diese Weise kann ein Stillstand der Fördervorrichtung - und damit eine manuelle Entladung des Förderbandes - verhindert werden, indem ein Ab- bzw. Weitertransport initiiert wird, bevor eine Überladung erreicht wird.

Bevorzugte Beispiele für ein solches Maß für eine Beladung des Förderbandes sind ein Leistungswert des Bandantriebs, insbesondere eine Stromaufnahme und/oder ein Drehmoment des Bandantriebs; eine dehnende Verformung eines Elements der Fördervorrichtung; eine auf ein Element der Fördervorrichtung wirkende Kraft, insbesondere Druck- und/oder Zugkraft; eine Lagerreaktion eines Lagers des Bandantriebs; ein Gewicht der auf einem Abschnitt des Förderbandes befindlichen tierischen Produkte; eine Abweichung, insbesondere in vertikaler Richtung, einer Lage eines Abschnitts des Förderbandes von einer Initiallage; und/oder ein Förderbandfortschritt, insbesondere eine Förderbandgeschwindigkeit

Bevorzugte Beispiele für eine Messeinrichtung zur Ermittlung eines solchen Maßes sind ein Kraftsensor, insbesondere ein Drucksensor und/oder Zugsensor, beispielsweise Wägezelle und/oder Dehnungsmessstreifen; ein Drehmomentsensor, beispielsweise Dehnungsmessstreifen; Strommessvorrichtung; ein Abstandssensor; und/oder ein Förderbandfortschrittsdetektor, insbesondere Drehzahlwächter und/oder Messrad

Vorzugsweise können außerhalb des eigentlichen Betriebs der Fördervorrichtung Messläufe des Förderbandes durchgeführt werden, um beispielsweise eine Kalibrierung des Maßes für die Beladung des Förderbandes durchzuführen und/oder eine jeweils aktuell vorliegende Beladung des Förderbandes zu ermitteln. Solche Messläufe sind vorzugsweise zeitlich voneinander beabstandet und dauern nur kurz an, vorzugsweise weniger als 10 Sekunden, insbesondere weniger als 5 Sekunden, um den eigentlichen Betrieb des Förderbandes bzw. der Fördervorrichtung nicht zu beeinflussen.

Besonders bevorzugt ist eine Ausgestaltung der Fördervorrichtung mit einer Steuervorrichtung, die ausgebildet ist, das ermittelte Maß für die Beladung des Förderbandes mit einem Sollwert zu vergleichen und vorzugsweise eine Warnmeldung zu generieren, wenn ein vorbestimmter Abstand zu dem Sollwert über- oder unterschritten wird.

Die Steuervorrichtung ist mit der Messeinrichtung vorzugsweise signaltechnisch verbunden, insbesondere um ein von der Messeinrichtung ermitteltes Maß für eine Beladung des Förderbandes zu empfangen. Ferner kann die Steuervorrichtung beispielsweise eine Speichereinheit umfassen, in der vorzugsweise ein Sollwert für das Maß für die Beladung des Förderbandes abgespeichert werden kann. Ein solcher Sollwert kann beispielsweise von einem Benutzer eingegeben bzw. vorgegeben werden und/oder an die Steuervorrichtung gesendet werden, beispielsweise vom Bandantrieb oder einer anderen Vorrichtung. Besonders bevorzugt ist es, wenn ein Sollwert aus zuvor in dieser (oder einer anderen) Fördervorrichtung ermittelten und vorzugsweise im Zeitverlauf abgespeicherten, und ggf. weiterverarbeiteten, Werten für das Maß für die Beladung des Förderbandes abgeleitet und verwendet wird.

Die Steuervorrichtung dient insbesondere dazu, den von der Messeinrichtung ermittelten aktuellen Wert des Maßes für die Beladung des Förderbandes mit einem, vorzugsweise vorbestimmten, Sollwert für dieses Maß zu vergleichen. Der Sollwert ist vorzugsweise so gewählt, dass er einer solchen Beladung des Förderbandes mit tierischen Produkten entspricht, bei der der Bandantrieb das Förderband noch in mindestens einer Förderrichtung antreiben kann, d. h. bei der noch keine Überladung des Förderbandes aufgetreten ist. Wenn sich der aktuelle Wert für das Maß für die Beladung des Förderbandes, der von der Messeinrichtung ermittelt wird, nun diesem Sollwert annähert und dabei ein, vorzugsweise vorbestimmter, Abstand zu dem Sollwert über- bzw. unterschritten wird, wird von der Steuervorrichtung eine Warnmeldung generiert und vorzugsweise auch ausgegeben. Insbesondere ist bevorzugt, dass eine solche Warnmeldung generiert wird, wenn ein vorbestimmter Abstand zwischen dem ermittelten Maß für die Beladung des Förderbandes und dem Sollwert unterschritten wird, d. h. sich der aktuelle Wert zu nah dem Sollwert annähert. Eine solche Annäherung des aktuellen Werts an den Sollwert zeigt eine drohende Überladungssituation an. Durch Generieren und vorzugsweise Ausgeben einer Warnmeldung, beispielsweise eines akustischen und/oder optischen und/oder eines anderen Warnsignals, welches beispielsweise an ein mobiles Endgerät oder einen Computer gesendet werden kann, kann einem Landwirt ein Eingreifen ermöglicht werden, um die drohende Überladungssituation zu verhindern.

Besonders bevorzugt ist, dass eine Signaleinrichtung zur Ausgabe des Warnsignals vorhanden ist. Das Warnsignal kann beispielsweise im Sinne einer Ampelanzeige ausgegeben werden, um unterschiedliche Stadien einer drohenden Überladung anzuzeigen. Dies ist insbesondere dann von Vorteil, wenn eine solche Warnmeldung, insbesondere in Form einer Ampel, den mit dem Beladen des Förderbandes betrauten Arbeiter angezeigt werden kann, so dass diese die Beladungsgeschwindigkeit bzw. die Beladungsmenge entsprechend anpassen können. Beispielsweise in der Hähnchenmast kann dies z. B. in der Form erfolgen, dass die mit dem Öffnen der Böden der Haltungseinrichtungen betrauten Arbeiter in Abhängigkeit von der, vorzugsweise in Ampelform ausgegebenen, Warnmeldung mehr oder weniger Masthähnchen pro Zeiteinheit auf das Band aufgeben, um so einen möglichst gleichmäßigen Massenstrom tierischer Produkte auf dem Förderband ohne Überladung zu erreichen.

In einer weiteren Ausgestaltung ist es bevorzugt, dass die Messeinrichtung ausgebildet ist, das Maß für die Beladung des Förderbandes wiederholt zu ermitteln, beispielsweise in regelmäßigen Abständen und/oder ereignisgesteuert und/oder benutzerinitiiert.

Diese Ausgestaltung sieht vor, dass die Messeinrichtung nicht nur einmalig die Beladung des Förderbandes ermittelt, sondern mehrmalig. Besonders bevorzugt ist eine Ermittlung in regelmäßigen Abständen, die vorzugsweise automatisch erfolgt. Beispielsweise kann eine automatische, regelmäßige Ermittlung eines Werts für das Maß für eine Beladung des Förderbandes durch die Messeinrichtung in einem Intervall von Sekunden, Minuten, Stunden und/oder Tagen erfolgen. Vorzugsweise kann das Intervall von einem Benutzer vorgegeben werden. Zusätzlich oder alternativ kann die Ermittlung eines Werts für das Maß für die Beladung des Förderbandes ereignisgesteuert erfolgen, d. h. beispielsweise immer nach dem Anfahren des Förderbandes, vor und/oder nach einem Entmistungsvorgang und/oder beim Eintreten anderer Ereignisse. Eine weitere zusätzliche oder alternative Möglichkeit ist es, dass ein Benutzer die Ermittlung eines, vorzugsweise aktuellen, Werts des Maßes für eine Beladung des Förderbandes durch die Messeinrichtung initiieren kann.

Durch eine solche wiederholte Ermittlung des Maßes für die Beladung des Förderbandes kann in der Steuervorrichtung vorzugsweise eine zeitliche Entwicklung des Maßes für die Beladung abgeleitet werden.

Die Steuervorrichtung ist ferner vorzugsweise ausgebildet, das ermittelte Maß für die Beladung des Förderbandes mit einem Maximalbeladungswert zu vergleichen und einen durch den Vergleich ermittelten Differenzwert auszugeben.

Der Maximalbeladungswert kann beispielsweise dem, vorzugsweise vorgegebenen, Sollwert entsprechen. Wenn der aktuelle Wert für das Maß für die Beladung des Förderbandes geringer ist als der Maximalbeladungswert, entspricht der Differenzwert einer noch maximal möglichen Zusatzbeladung. Wenn der aktuelle Wert des Maßes für die Beladung des Förderbandes größer ist als der Maximalbeladungswert, gibt der Differenzwert ein Maß für die Überladung des Förderbandes an.

Weitere Vorteile ergeben sich insbesondere dann, wenn die Steuervorrichtung ausgebildet ist, einen maximalen Zusatzbeladungszeitraum aus dem Differenzwert und einem Beladungswert pro Zeit zu ermitteln; und/oder einen maximalen Beladungswert pro Zeit aus dem Differenzwert und einem Zusatzbeladungszeitraum zu ermitteln.

Insbesondere wenn der Differenzwert der maximal möglichen Zusatzbeladung entspricht, also das ermittelte Maß für die Beladung des Förderbandes niedriger ist als der Maximalbeladungswert, kann dieser Differenzwert genutzt werden, um zu ermitteln, wie lange noch bei einer bestimmten Beladungsrate das Förderband beladen werden kann, bevor eine Überladung eintritt und/oder mit welcher Beladungsrate das Förderband für einen vorbestimmten Zeitraum noch beladen werden darf, um ebenfalls eine Überladung zu vermeiden. Auch hier ist es vorteilhaft, wenn die entsprechenden Ergebnisse ausgegeben und angezeigt werden können, um einen Betreiber und/oder Mitarbeitern entsprechend abgestimmte Handlungsmaßnahmen zu ermöglichen.

Dabei ist es ferner besonders bevorzugt, dass die Steuervorrichtung ausgebildet ist, das ermittelte Maß im Zeitverlauf zu speichern und vorzugsweise ein durchschnittliches Maß für eine Beladung des Förderbandes pro Zeiteinheit, vorzugsweise in einem bestimmten Zeitraum, abzuleiten.

Diese Ausgestaltung hat den Vorteil, dass Daten über die Veränderung des Maßes für die Beladung des Förderbandes gespeichert und daraus durchschnittliche Beladungsraten, d. h. eine Beladung des Förderbandes pro Zeiteinheit, abgeleitet werden können, beispielsweise für unterschiedliche Zeiträume unter unterschiedlichen Rahmenbedingungen. Wenn zusätzlich diese Rahmenbedingungen abgespeichert werden können, können diese Daten auch zur Prognose zukünftiger Beladungsraten unter ähnlichen Rahmenbedingungen herangezogen werden.

Wenn also eine bekannte, ermittelte und/oder prognostizierte zu erwartende Zuladung an tierischen Produkten eine zuvor ermittelte oder vorbestimmte, maximale Zuladung überschreitet, wird vorzugsweise ein Warnsignal generiert. Dieses Warnsignal kann, wie oben beschrieben, ein optisches oder akustisches oder ein anderes Signal oder eine Kombination von Signalen sein.

Besonders bevorzugt ist eine Ausgestaltung der Fördervorrichtung, bei der das Maß für die Beladung des Förderbandes mindestens eines aus der folgenden Gruppe ist: ein Leistungswert des Bandantriebs, insbesondere eine Stromaufnahme und/oder ein Drehmoment des Bandantriebs; eine dehnende Verformung eines Elements der Fördervorrichtung; eine auf ein Element der Fördervorrichtung wirkende Kraft, insbesondere Druck- und/oder Zugkraft; eine Lagerreaktion eines Lagers des Bandantriebs; ein Gewicht der auf einem Abschnitt des Förderbandes befindlichen tierischen Produkte; eine Abweichung, insbesondere in vertikaler Richtung, einer Lage eines Abschnitts des Förderbandes von einer Initiallage; ein Förderbandfortschritt, insbesondere eine Förderbandgeschwindigkeit.

Ferner ist besonders bevorzugt, dass die Messeinrichtung ausgebildet ist als Kraftsensor, insbesondere Drucksensor und/oder Zugsensor, beispielsweise Wägezelle und/oder Dehnungsmessstreifen; Drehmomentsensor, beispielsweise Dehnungsmessstreifen; Strommessvorrichtung; Abstandssensor; und/oder Förderbandfortschrittsdetektor, insbesondere Drehzahlwächter und/oder Messrad.

Insbesondere sind Kombinationen von Messeinrichtung und Maß für die Beladung des Förderbandes bevorzugt, die eine entsprechende Passung dahingehend aufweisen, dass die Messeinrichtung das entsprechende Maß für die Beladung des Förderbandes ermitteln kann. Im Folgenden werden einige besonders bevorzugte Kombinationen von Maß für die Beladung des Förderbandes und Messeinrichtung, gegebenenfalls auch deren Anordnung, aufgeführt.

Eine bevorzugte Ausgestaltung einer Fördervorrichtung sieht vor, dass das Maß für die Beladung des Förderbandes eine Stromaufnahme des Bandantriebs ist; und die Messeinrichtung eine Strommessvorrichtung ist, die vorzugsweise ausgebildet und angeordnet ist, einen Strom einer Zuleitung des Bandantriebs zu ermitteln.

Dabei ist es insbesondere bevorzugt, die Messung der Stromaufnahme mit einem Förderbandfortschrittsdetektor, z. B. einem Drehzahlwächter beispielsweise an einer Umlenkrolle oder einem separaten Messrad auf dem Förderband zu kombinieren. Ein solcher Förderbandfortschrittsdetektor kann als Kontrollinstrument eingesetzt werden für die Erkennung, ob Schlupf auftritt. Beginnender Schlupf zeigt an, dass die ermittelte Stromaufnahme kein direktes Maß für die auf das Förderband wirkende Antriebsleistung bzw. Zugkraft mehr ist, sondern bereits eine, ggf. zunächst geringe, Überladung eingetreten ist. Im Extremfall erfolgt trotz hoher Stromaufnahme bei vollständigem Schlupf keine Förderbandbewegung mehr. Besonders bevorzugt ist nicht nur eine Ermittlung, ob Schlupf auftritt oder nicht, sondern auch in welchem Umfang, was als Indikator für die Stärke der Überladung verwendet werden kann.

Eine weitere bevorzugte Ausgestaltung einer Fördervorrichtung sieht vor, dass das Maß für die Beladung des Förderbandes ein Drehmoment des Bandantriebs ist; und die Messeinrichtung mindestens einen Dehnungsmessstreifen umfasst, der vorzugsweise an einem Achszapfen einer Antriebsrolle des Bandantriebs angeordnet ist.

Eine weitere bevorzugte Ausgestaltung einer Fördervorrichtung sieht vor, dass das Maß für die Beladung des Förderbandes eine Lagerreaktion eines Lagers des Bandantriebs ist; und die Messeinrichtung mindestens einen Kraftsensor umfasst, der vorzugsweise an einem Lager einer Antriebsrolle des Bandantriebs angeordnet ist.

Eine weitere bevorzugte Ausgestaltung einer Fördervorrichtung sieht vor, dass das Maß für die Beladung des Förderbandes eine Abweichung in vertikaler Richtung einer Lage eines Abschnitts des Förderbandes zwischen zwei Förderbandträgern von einer Initiallage ist; und die Messeinrichtung mindestens einen Abstandssensor umfasst, der vorzugsweise in vertikaler Richtung unterhalb des Förderbandes zwischen zwei Förderbandträgern angeordnet ist.

Eine weitere bevorzugte Ausgestaltung einer Fördervorrichtung sieht vor, dass das Maß für die Beladung des Förderbandes ein Gewicht der auf einem Abschnitt des Förderbandes befindlichen tierischen Produkte ist; und die Messeinrichtung mindestens eine Wägezelle umfasst, die an einem Förderbandträger, insbesondere einem Förderbandunterzug und/oder Förderbandseitenlagerung, angeordnet ist.

Eine weitere bevorzugte Ausgestaltung einer Fördervorrichtung umfasst eine Korrekturvorrichtung, die ausgebildet und angeordnet ist, in Abhängigkeit eines Korrektursignals eine Ausrichtung des Bandantriebs zu verändern; wobei das Maß für die Beladung des Förderbandes eine auf eine Korrekturvorrichtung wirkende Zugkraft ist; und die Messeinrichtung mindestens einen Dehnungsmessstreifen zur Ermittlung der auf die Korrekturvorrichtung wirkenden Zugkraft und vorzugsweise mindestens einen Förderbandfortschrittsdetektor umfasst.

Gemäß einem weiteren Aspekt wird die eingangs genannte Aufgabe gelöst durch eine Antriebsvorrichtung nach Anspruch 14 für eine zuvor beschriebene Fördervorrichtung, umfassend einen Bandantrieb zum Antreiben eines Förderbands in einer Förderrichtung, eine Korrekturvorrichtung, die ausgebildet und angeordnet ist, in Abhängigkeit eines Korrektursignals die Ausrichtung des Bandantriebs zu verändern, eine Messeinrichtung, die ausgebildet und angeordnet ist, ein Maß für eine Beladung des Förderbandes zu ermitteln, und eine Steuerungsvorrichtung, die ausgebildet ist, ein Abweichungssignal von einem ersten Sensor zur Erfassung einer Abweichung einer Lage einer Kante des Förderbands und von einem zweiten Sensor zur Erfassung einer Abweichung einer Lage einer weiteren Kante des Förderbands zu empfangen, in Abhängigkeit von einem Abweichungssignal ein Korrektursignal zu generieren und an die Korrekturvorrichtung auszugeben, und die ferner ausgebildet ist, das ermittelte Maß für die Beladung des Förderbandes mit einem Sollwert zu vergleichen, wobei die Steuerungsvorrichtung ausgebildet ist, in Abhängigkeit davon, von welchem der beiden Sensoren ein Abweichungssignal empfangen wird, die Ausrichtung des Bandantriebs in eine erste oder eine von der ersten entgegengesetzten zweiten Richtung zu verändern.
Die Antriebsvorrichtung kann vorzugsweise fortgebildet werden durch eine Messeinrichtung, die ausgebildet und angeordnet ist, ein Maß für eine Beladung des Förderbandes zu ermitteln.

Weitere besonders bevorzugte Ausgestaltungen der Antriebsvorrichtung werden im Folgenden ausgeführt.

Eine bevorzugte Ausgestaltung der Antriebsvorrichtung umfasst eine Steuervorrichtung, die ausgebildet ist, das ermittelte Maß für die Beladung des Förderbandes mit einem Sollwert zu vergleichen und vorzugsweise eine Warnmeldung zu generieren, wenn ein vorbestimmter Abstand zu dem Sollwert über- oder unterschritten wird.

Eine weitere bevorzugte Ausgestaltung der Antriebsvorrichtung sieht vor, dass die Messeinrichtung ausgebildet ist, das Maß für die Beladung des Förderbandes wiederholt zu ermitteln, beispielsweise in regelmäßigen Abständen und/oder ereignisgesteuert und/oder benutzerinitiiert.

Eine weitere bevorzugte Ausgestaltung der Antriebsvorrichtung sieht vor, dass die Steuervorrichtung ausgebildet ist, das ermittelte Maß für die Beladung des Förderbandes mit einem Maximalbeladungswert zu vergleichen und einen durch den Vergleich ermittelten Differenzwert auszugeben.

Eine weitere bevorzugte Ausgestaltung der Antriebsvorrichtung sieht vor, dass die Steuervorrichtung ausgebildet ist, einen maximalen Zusatzbeladungszeitraum aus dem Differenzwert und einem Beladungswert pro Zeit zu ermitteln; und/oder einen maximalen Beladungswert pro Zeit aus dem Differenzwert und einem Zusatzbeladungszeitraum zu ermitteln.

Eine weitere bevorzugte Ausgestaltung der Antriebsvorrichtung sieht vor, dass die Steuervorrichtung ausgebildet ist, das ermittelte Maß im Zeitverlauf zu speichern und vorzugsweise ein durchschnittliches Maß für eine Beladung des Förderbandes pro Zeiteinheit, vorzugsweise in einem bestimmten Zeitraum, abzuleiten.

Eine weitere bevorzugte Ausgestaltung der Antriebsvorrichtung sieht vor, dass das Maß für die Beladung des Förderbandes eine Stromaufnahme des Bandantriebs ist; und die Messeinrichtung eine Strommessvorrichtung ist, die vorzugsweise ausgebildet und angeordnet ist, einen Strom einer Zuleitung des Bandantriebs zu ermitteln.

Eine weitere bevorzugte Ausgestaltung der Antriebsvorrichtung sieht vor, dass das Maß für die Beladung des Förderbandes ein Drehmoment des Bandantriebs ist; und die Messeinrichtung mindestens einen Dehnungsmessstreifen umfasst, der vorzugsweise an einem Achszapfen einer Antriebsrolle des Bandantriebs angeordnet ist.

Eine weitere bevorzugte Ausgestaltung der Antriebsvorrichtung sieht vor, dass das Maß für die Beladung des Förderbandes eine Lagerreaktion eines Lagers des Bandantriebs ist; und die Messeinrichtung mindestens einen Kraftsensor umfasst, der vorzugsweise an einem Lager einer Antriebsrolle des Bandantriebs angeordnet ist.

Eine weitere bevorzugte Ausgestaltung der Antriebsvorrichtung umfasst eine Korrekturvorrichtung, die ausgebildet und angeordnet ist, in Abhängigkeit eines Korrektursignals eine Ausrichtung des Bandantriebs zu verändern; wobei das Maß für die Beladung des Förderbandes eine auf eine Korrekturvorrichtung wirkende Zugkraft ist; und die Messeinrichtung mindestens einen Dehnungsmessstreifen zur Ermittlung der auf die Korrekturvorrichtung wirkenden Zugkraft und vorzugsweise mindestens einen Förderbandfortschrittsdetektor umfasst.
Die Antriebsvorrichtung und ihre möglichen Fortbildungen sind insbesondere geeignet, zusammen mit einer zuvor beschriebenen Fördervorrichtung oder einer ihrer Fortbildungen verwendet zu werden. Die Antriebsvorrichtung kann ferner fortgebildet nach den zuvor beschriebenen, auf die Antriebsvorrichtungen zutreffenden Merkmalen der Fördervorrichtung und ihrer Fortbildungen. Zu den Vorteilen, Ausführungsvarianten und Ausführungsdetails der Antriebsvorrichtung und ihrer Fortbildungen wird die vorangegangene Beschreibung zu den entsprechenden Merkmalen der Fördervorrichtung verwiesen.
Gemäß einem weiteren Aspekt wird die eingangs genannte Aufgabe gelöst durch ein Verfahren nach Anspruch 15 zum Fördern von tierischen Produkten in einem landwirtschaftlichen Betrieb mittels einer Fördervorrichtung, insbesondere einer zuvor beschriebenen Fördervorrichtung oder einer ihrer Fortbildungen, umfassend die Schritte: Antreiben eines Förderbands in einer Förderrichtung mittels eines Bandantriebs, Erfassung einer Abweichung einer ersten Lage einer Kante des Förderbands mittels eines Sensors, Erfassung einer Abweichung einer Lage einer weiteren Kante des Förderbands, Ausgeben eines Abweichungssignals, wenn die Lage der ersten Kante des Förderbands um einen vorbestimmten Wert von einer Soll-Lage abweicht, Ausgeben eines Abweichungssignals, wenn die Lage der weiteren Kante des Förderbands um einen vorbestimmten Wert von einer Soll-Lage abweicht, Ermitteln eines Korrektursignals in Abhängigkeit von dem Abweichungssignal mittels einer Steuerungsvorrichtung, Ausgeben des Korrektursignals an eine Korrekturvorrichtung, Verändern der Ausrichtung des Bandantriebs in Abhängigkeit eines Korrektursignals mittels der Korrekturvorrichtung.

Das Verfahren umfasst erfindungsgemäß den Schritt Ermitteln eines Maßes für eine Beladung des Förderbandes mittels einer Messeinrichtung. Das Verfahren ist dadurch gekennzeichnet, dass das ermittelte Maß für die Beladung des Förderbandes mit einem Sollwert verglichen wird und vorzugsweise eine Warnmeldung generiert wird, wenn ein vorbestimmter Abstand zu dem Sollwert über- oder unterschritten wird.
Eine weitere bevorzugte Ausgestaltung des Verfahrens ist dadurch gekennzeichnet, dass das Maß für die Beladung des Förderbandes wiederholt ermittelt wird, beispielsweise in regelmäßigen Abständen und/oder ereignisgesteuert und/oder benutzerinitiiert.
Eine weitere bevorzugte Ausgestaltung des Verfahrens ist gekennzeichnet durch die Schritte: Vergleichen des ermittelten Maßes für die Beladung des Förderbandes mit einem Maximalbeladungswert; und Ausgabe eines durch den Vergleich ermittelten Differenzwertes.
Eine weitere bevorzugte Ausgestaltung des Verfahrens ist gekennzeichnet durch den Schritt: Ermitteln eines maximalen Zusatzbeladungszeitraums aus dem Differenzwert und einem Beladungswert pro Zeit; und/oder Ermitteln eines maximalen Beladungswerts pro Zeit aus dem Differenzwert und einem Zusatzbeladungszeitraum.

Eine weitere bevorzugte Ausgestaltung des Verfahrens ist gekennzeichnet durch den Schritt: Speichern des ermittelten Maßes für eine Beladung des Förderbandes im Zeitverlauf; und vorzugsweise Ableiten eines durchschnittlichen Maßes für eine Beladung des Förderbandes pro Zeiteinheit, vorzugsweise in einem bestimmten Zeitraum.
Weitere vorteilhafte Ausgestaltungen des Verfahrens ergeben sich, wenn als Maß für die Beladung des Förderbandes mindestens eines aus der folgenden Gruppe ermittelt wird: ein Leistungswert des Bandantriebs, insbesondere eine Stromaufnahme und/oder ein Drehmoment des Bandantriebs; eine dehnende Verformung eines Elements der Fördervorrichtung; eine auf ein Element der Fördervorrichtung wirkende Kraft, insbesondere Druck- und/oder Zugkraft; eine Lagerreaktion eines Lagers des Bandantriebs; ein Gewicht der auf einem Abschnitt des Förderbandes befindlichen tierischen Produkte; eine Abweichung, insbesondere in vertikaler Richtung, einer Lage eines Abschnitts des Förderbandes von einer Initiallage; ein Förderbandfortschritt, insbesondere eine Förderbandgeschwindigkeit.
Weitere vorteilhafte Ausgestaltungen des Verfahrens ergeben sich insbesondere auch dadurch, dass für die Ermittlung des Maßes für die Beladung des Förderbandes eine Messeinrichtung verwendet wird, die ausgebildet ist als Kraftsensor, insbesondere Drucksensor und/oder Zugsensor, beispielsweise Wägezelle und/oder Dehnungsmessstreifen; Drehmomentsensor, beispielsweise Dehnungsmessstreifen; Strommessvorrichtung; Abstandssensor; und/oder Förderbandfortschrittsdetektor, insbesondere Drehzahlwächter und/oder Messrad.
Diese Verfahren und ihre weiteren möglichen Fortbildungen weisen Merkmale, bzw. Verfahrensschritte, die sie insbesondere für geeignet machen, mit einer erfindungsgemäßen Fördervorrichtung und ihrer Fortbildung verwendet zu werden. Zu den Vorteilen, Ausführungsvarianten und Ausführungsdetails dieses Verfahrens und seiner Fortbildungen wird auf die vorangegangene Beschreibung der entsprechenden Vorrichtungsmerkmale verwiesen. Bevorzugte Ausführungsformen der Erfindung werden beispielhaft anhand der beiliegenden Figuren beschrieben. Es zeigen:
- Figur 1a:: drei übereinander angeordnete Bandantriebe;
- Figur 1b:: eine vergrößerte Darstellung eines Details aus Figur 1a aus anderer Perspektive;
- Figur 2:: die Trapezgewindespindel mit Motoraufnahme und Flanschplatte der in Figur 1b dargestellten Ausführungsformen der Korrekturvorrichtung;
- Figuren 3a-e:: verschiedene schematische Ablaufdiagramme von Steuerungsvorgängen
- Figur 4:: einen als Gabellichtschranke ausgebildeten Sensor;
- Figur 5:: eine Teilansicht einer ersten weiteren beispielhaften Ausführungsform einer erfindungsgemäßen Fördervorrichtung;
- Figur 6:: eine Teilansicht einer zweiten weiteren beispielhaften Ausführungsform einer erfindungsgemäßen Fördervorrichtung;
- Figur 7:: eine Teilansicht einer dritten weiteren beispielhaften Ausführungsform einer erfindungsgemäßen Fördervorrichtung;
- Figur 8:: eine dreidimensionale Ansicht eines Trägergerüsts noch einer weiteren beispielhaften Ausführungsform einer erfindungsgemäßen Fördervorrichtung;
- Figur 9:: einen Teilquerschnitt einer Variante der in Figur 8 gezeigten Ausführungsform; und
- Figur 10:: einen Teilquerschnitt einer weiteren beispielhaften Ausführungsform einer erfindungsgemäßen Fördervorrichtung.

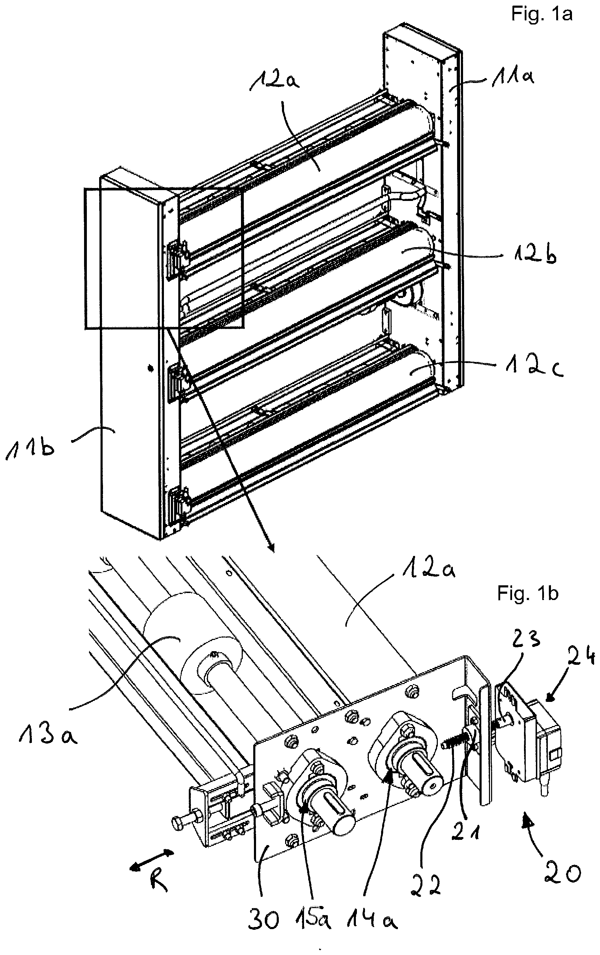

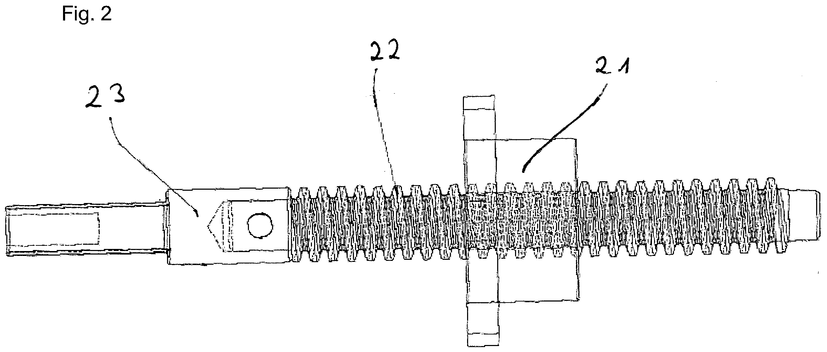

In Figur 1 sind drei übereinander angeordnete Bandantriebe 12a,b,c dargestellt, die als beidseitig gelagerte, angetriebene Antriebsrollen ausgebildet sind. Die Bandantriebe 12a,b,c sind beidseitig an einem Antriebsgestell 11a,b gelagert. In Figur 1b ist zu erkennen, dass ein (nicht dargestelltes) Förderband von Andruckrollen 13a auf die Antriebsrolle 12a angepresst wird, um über die dadurch entstehende Reibung in einer Förderrichtung angetrieben zu werden. Sowohl die Andruckrollen 13a als auch die Antriebsrolle 12a sind, wie in Figur 1b zu erkennen, über eine Verstellplatte 30 horizontal verschieblich in und entgegen der Förderrichtung, wie mit Pfeil R angedeutet, gelagert. Die Verstellplatte 30 weist dazu Ausnehmungen zur Aufnahme der Lager 14a, 15a der Antriebsrolle 12a und der Andruckrollen 13a auf. Ferner ist in Figur 1b eine Korrekturvorrichtung 20 zu erkennen, die (ohne den Motor 24) auch in Figur 2 dargestellt ist. In der hier gezeigten Ausführungsform ist die Korrekturvorrichtung 20 durch einen Motor 24 gebildet, dessen Drehbewegung über eine Motoraufnahme 23 und die Trapezgewindestange 22 als Linearbewegung an die Flanschplatte 23 mit entsprechendem, in die Trapezgewindestange eingreifendem Innengewinde umgesetzt wird. Die Flanschplatte 23 ist an der Verstellplatte 30 befestigt, sodass eine Relativbewegung der Flanschplatte 21 zur Trapezgewindestange 22 zu einer linearen Verschiebung der Verstellplatte in Richtung R führt. Auf diese Weise wird die Position des Lagers 14a des Bandantriebs 12a horizontal verschoben, sodass sich dadurch die Ausrichtung des Bandantriebs 12a ändert. Mit einer solchen Änderung der Ausrichtung des Bandantriebs 12a kann der Verlauf des Förderbands korrigiert werden.

Die Ansteuerung der Korrekturvorrichtung 20 zur Erzeugung einer horizontalen Bewegung der Verstellplatte 30, um die Ausrichtung des Bandantriebs 12a zu verändern, erfolgt über ein von einer Steuerungsvorrichtung (nicht dargestellt) erzeugtes und an die Korrekturvorrichtung 20 ausgegebenes Korrektursignal. Dieses Korrektursignal wird von der Steuerungsvorrichtung in Abhängigkeit von einem Abweichungssignal generiert. Dieses Abweichungssignal wird von einem Sensor generiert und an die Steuerungsvorrichtung ausgegeben.

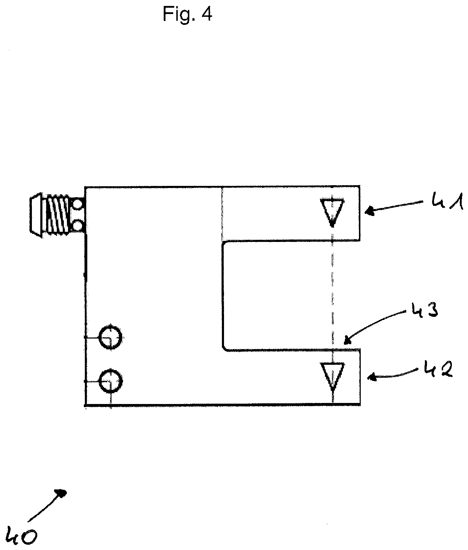

Eine mögliche, bevorzugte Ausführungsform eines solchen Sensors ist in Figur 4 dargestellt. Der als Gabellichtschranke 40 ausgebildete Sensor weist einen Rotlicht-Laser als Sensor 41 auf und eine Fotodiode als Empfänger 42. Mit 43 ist eine Detektionsfläche bezeichnet, die hier der Fläche der Fotodiode entspricht, auf die der Rotlicht-Laser auftrifft. In einer bevorzugten Ausgestaltung ist die Gabellichtschranke 40 derart beabstandet von der Soll-Lage der Kante eines Förderbands angeordnet, dass die Lichtschranke nur dann unterbrochen wird, wenn der Verlauf des Förderbands von seiner Soll-Lage abweicht und die Kante des Förderbands die Lichtschranke durchbricht. In diesem Fall generiert die Gabellichtschranke ein entsprechendes Abweichungssignal und gibt dieses an die Steuerungsvorrichtung aus. Wenn zwei Gabellichtschranken an gegenüberliegenden Kanten des Förderbands vorgesehen sind, kann die Steuerungsvorrichtung in Abhängigkeit davon, welcher der beiden Sensoren das Abweichungssignal generiert hat, eine entsprechende Verstellung der Verstellplatte 30 mittels der Korrekturvorrichtung 20 in oder entgegen der Förderrichtung auslösen. Wenn beide einander gegenüberliegenden Gabellichtschranken ein Abweichungssignal generieren, gibt die Steuerungsvorrichtung eine Fehlermeldung aus, da dies auf einen fehlerhaften, beschädigten oder verschmutzten Sensor oder beispielsweise auf ein gerissenes Förderband hinweisen kann.

Vorzugsweise ist der Sensor 40 derart zur horizontalen geneigt angeordnet, dass insbesondere die Detektionsfläche 43 in einem Winkel zur horizontalen geneigt ist, vorzugsweise in einem Winkel zwischen 30 und 60 Grad, beispielsweise 45 Grad. Auf diese Weise können die Anhaftung von Verunreinigung auf der Detektionsfläche verringert werden bzw. können solche Verunreinigungen leichter von der Detektionsfläche hinuntergleiten.

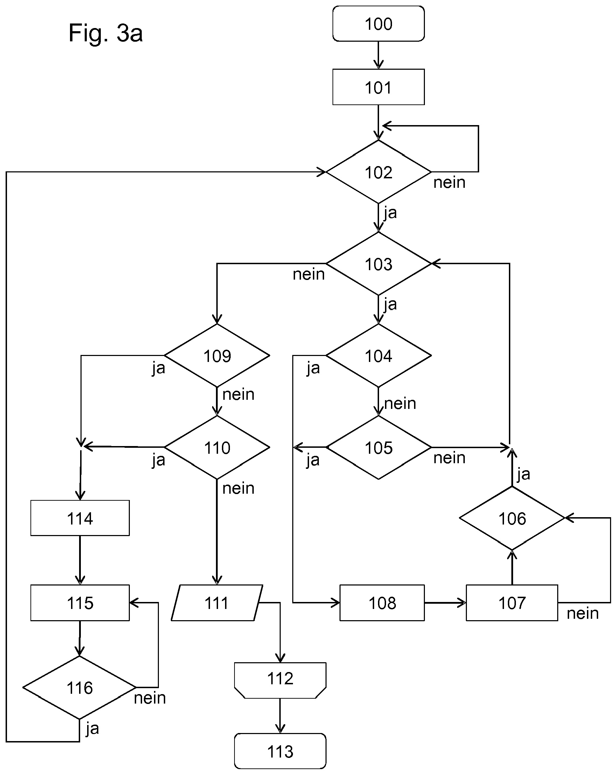

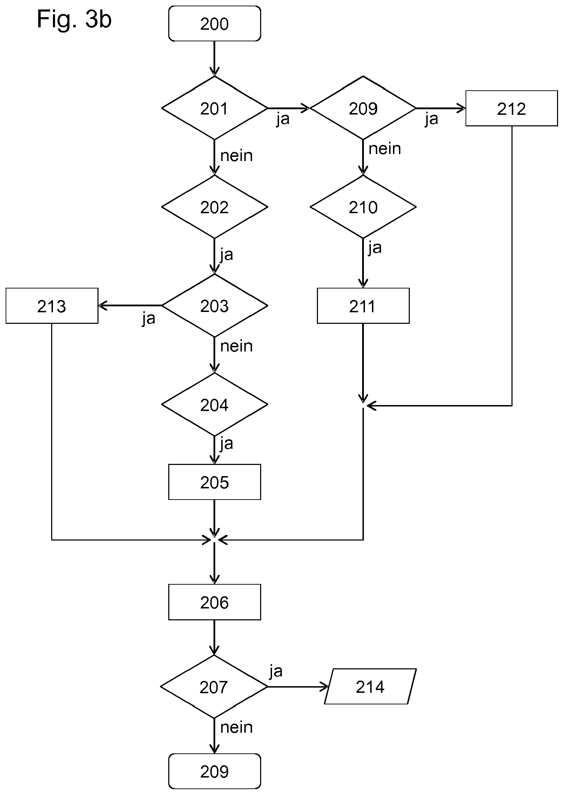

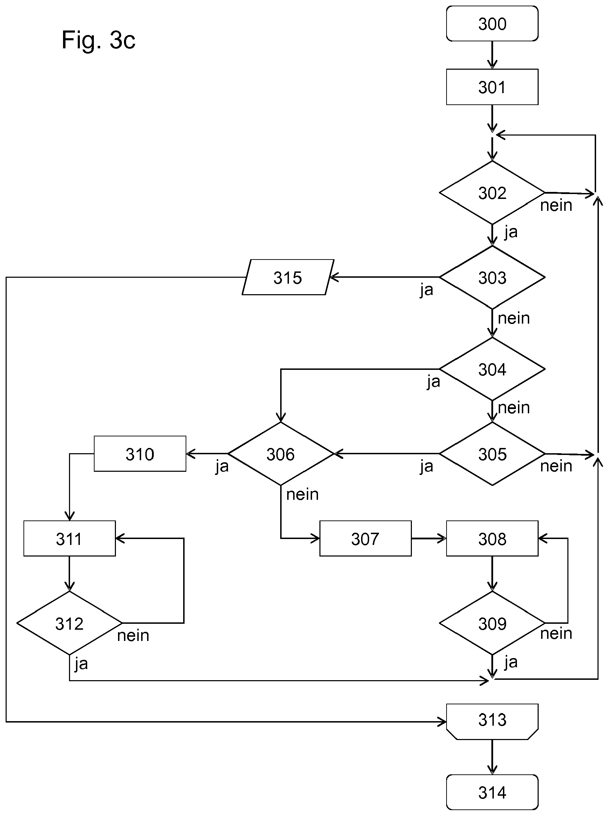

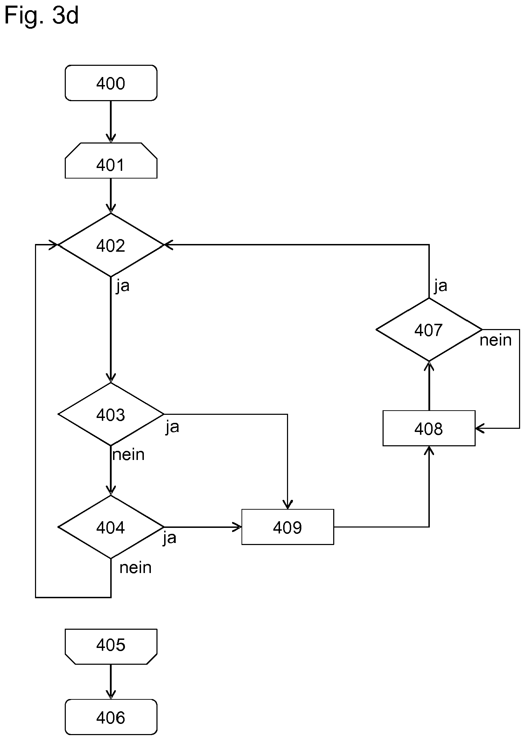

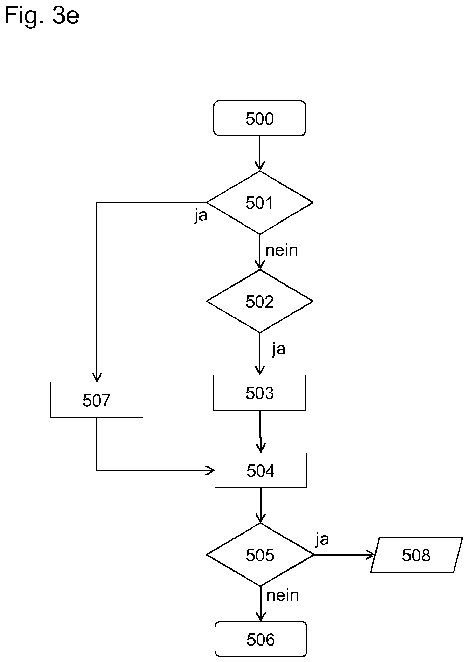

In den Figuren 3a bis 3e sind verschiedene schematische Ablaufdiagramme für unterschiedliche Steuerungen dargestellt. Figur 3a zeigt die Steuerung einer Variante mit induktiven Sensoren, Figur 3b zeigt die Erfassung der Bewegung der Verstellplatte 30, Figur 3c zeigt die Steuerung einer Variante mit zwei Gabellichtschranken, Figur 3d zeigt die Steuerung einer Variante mit einem Ultraschallsensor und Figur 3e die Erfassung der Bewegung der Verstellplatte 30 für die Variante mit Ultraschallsensor.

Bei der in Figur 3a dargestellten Steuerung einer Variante mit induktiven Sensoren beginnt die Steuerung im Schritt 100, wenn auch im Schritt 101 eine Systemfreigabe vorhanden ist. Wenn dies der Fall ist, wird als nächstes in Schritt 102 überprüft, ob eine zuvor festgelegte Systemwartezeit, beispielsweise 0 bis 30 Minuten, insbesondere 15 Minuten, abgelaufen ist. Ist dies der Fall, wird im Schritt 103 erfasst, ob die Sensormitte belegt ist. Wenn dies der Fall ist, wird in den Schritten 104, 105 überprüft, ob der Sensor auch rechts oder links belegt ist, was auf einen abweichenden Förderbandverlauf schließen lässt. Wenn dies der Fall ist, wird in Schritt 108 zunächst die bisherige Bewegung der Verstellplatte 30 erfasst (wie im Detail in Bezug auf Figur 3b beschrieben) und anschließend in Schritt 107 eine einfache Motordrehung durchgeführt, an deren Anschluss in Schritt 106 überprüft wird, die dafür erforderliche Zeit abgelaufen ist. Wenn die Abfrage nach der Belegung der Sensormitte in Schritt 103 mit nein beantwortet wird, wird in den Schritten 109, 110 überprüft, ob der Sensor rechts oder links belegt ist. Wenn weder das eine, noch das andere der Fall ist, wird in Schritt 111 eine Fehlermeldung ausgegeben und die Steuerung über die Schritte 112, 113 beendet. Wenn die Abfrage in den Schritten 109, 110 ergibt, dass der Sensor links oder rechts belegt, wird wieder die bisherige Bewegung der Verstellplatte 30 erfasst in Schritt 114 und in Schritt 115 eine doppelte Motordrehung veranlasst, an die im Anschluss in Schritt 116 überprüft wird, ob die hierfür erforderliche doppelte Zeit verstrichen ist.

Die Erfassung der bisherigen Bewegung der Verstellplatte 30 ist in Figur 3b dargestellt und beginnt in Schritt 200 und der anschließenden Abfrage in Schritt 201 ob eine einfache Motordrehung erfolgt ist. Falls ja, schließt sich die Abfrage nach einer Motordrehung rechts in Schritt 209 bzw. nach einer Motordrehung links in Schritt 210 an, woraufhin in Abhängigkeit diese Ergebnisse in den Schritten 211, 212 ein Zähler um eins herauf- oder um eins herabgesetzt wird. Wenn keine einfache Motordrehung erfolgt ist, wird in Schritt 202 auf eine doppelte Motordrehung geschlossen und in den Schritten 203, 204 die Drehrichtung abgefragt und anschließend in den Schritten 205, 213 der Zähler entsprechend um zwei erhöht oder reduziert. In Schritt 206 erfolgt eine Neuberechnung des Zählers und in Schritt 207 eine Abfrage, ob die Verstellplatte 30 bereits die maximale Begrenzung erreicht hat. Wenn dies der Fall ist, wird in Schritt 214 die Fehlermeldung ausgegeben, ansonsten ist die Erfassung der Bewegung in Schritt 208 beendet.

Die Steuerung für eine Variante mit zwei Gabellichtschranken erfolgt gemäß Figur 3c ausgehend von Start 300 und der Systemfreigabe in Schritt 301 nach einer Abfrage nach dem Ablauf der Systemwartezeit in Schritt 302 mit einer Abfrage in Schritt 303, ob beide Gabellichtschranken aktiv sind. Ist dies nicht der Fall, wird in Schritt 315 ein Fehler ausgegeben, der direkt über die Schritte 313 und 314 zur Beendigung führt. Wenn beide Lichtschranken aktiv sind, wird in den Schritten 304, 305 abgefragt, ob die rechte oder die linke Gabellichtschranke unterbrochen sind, d.h. ein Abweichungssignal ausgeben. Wenn dies der Fall ist, wird in Schritt 306 überprüft, ob die Gabellichtschranke schon aktiv gewesen ist. Wenn dies nicht der Fall ist, wird nach der Erfassung der Bewegung der Verstellplatte 30 in Schritt 307 eine einfache Motordrehung in Schritt 308 initiiert und in Schritt 309 überprüft, ob die hierfür erforderliche Motordrehzeit abgelaufen ist. Falls die Gabellichtschranke schon vorher aktiv gewesen ist, wird nach der Erfassung der Bewegung der Verstellplatte 30 in Schritt 310 im Schritt 311 eine doppelte Motordrehung initiiert und in Schritt 312 abgefragt, ob die hierfür erforderliche doppelte Motordrehzeit abgelaufen ist. Die Erfassung der Bewegung der Verstellplatte 30 kann wie in Figur 3b dargestellt erfolgen.

In Figur 3d ist die Steuerung in einer Variante mit einem Ultraschallsensor dargestellt. Nach dem Start in Schritt 400, der Systemfreigabe in Schritt 401 und der Abfrage in Schritt 402, ob die Systemwartezeit abgelaufen ist, erfolgt in den Schritten 403, 404 eine Spannungsabfrage, die in diesem Fall dem Abweichungssignal entspricht. Wird in Schritt 403 eine Spannung von unter 4 Volt festgestellt, wird in Schritt 409 die Bewegung der Verstellplatte 30 erfasst, wie im Folgenden mit Bezug auf Figur 3e detailliert dargestellt. Anschließend wird in Schritt 408 eine Motordrehung veranlasst und in Schritt 407 überprüft, ob die dafür erforderliche Drehzeit abgelaufen ist. Wenn in Schritt 404 eine Spannung von 6 Volt überschritten ist, wird ebenfalls weiter gemäß der Schritte 409, 408 und 407 verfahren. Wenn die Abfragen in den Schritten 403 und 404 ergeben, dass die Spannung zwischen 4 und 6 Volt liegt, wird kein Abweichungssignal ausgegeben und das System wartet auf den Ablauf der Systemwartezeit für die nächste Abfrage.

In Figur 3e ist die Erfassung der Bewegung der Verstellplatte 30 für die Variante mit einem Ultraschallsensor dargestellt. Nach dem Start 500 wird in Schritt 501 erfasst, ob eine Motordrehung nach rechts erfolgt ist oder in Schritt 502 eine Motordrehung nach links erfolgt ist. Abhängig davon, ob die Motordrehung nach rechts oder links erfolgt ist, wird in den Schritten 507, 503 ein Zähler um eins heraufgesetzt oder reduziert. In Schritt 504 wird der entsprechende Zählerstand bestimmt und in Schritt 505 überprüft, ob sich die Verstellplatte 30 bereits in ihrer maximalen Position befindet, d.h. die Begrenzung erreicht wurde. Wenn dies der Fall ist, wird in Schritt 508 eine Fehlermeldung ausgegeben, andernfalls ist die Erfassung in Schritt 506 beendet.

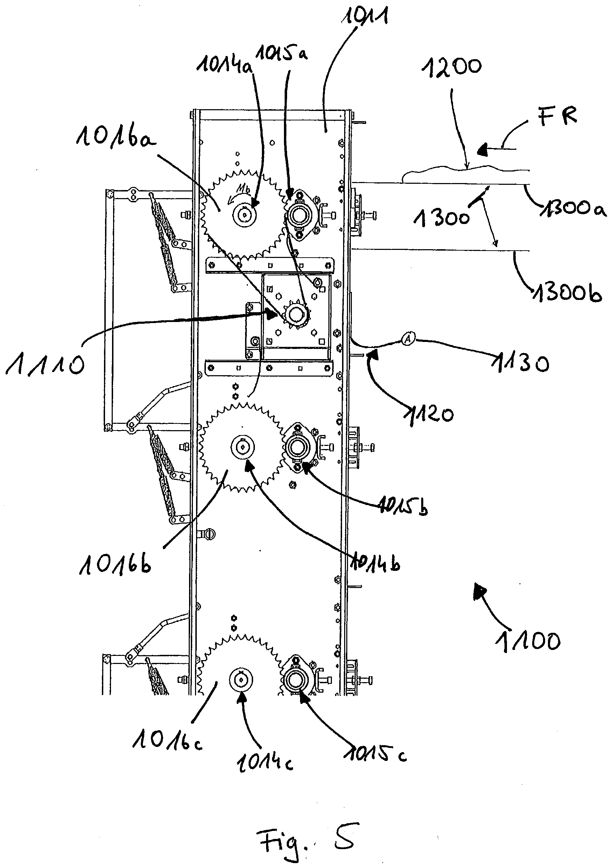

Die Figuren 5 bis 10 zeigen verschiedene weitere beispielhafte Ausführungsformen einer erfindungsgemäßen Fördervorrichtung. Gleiche oder im Wesentlichen gleiche Elemente bzw. Elemente mit gleicher bzw. im Wesentlichen gleicher Funktion sind in den unterschiedlichen Figuren mit gleichen Bezugszeichen bezeichnet, teilweise mit einem nachgestellten "'".

In Figur 5 ist eine Teilseitenansicht einer ersten weitere beispielhaften Ausführungsform einer erfindungsgemäßen Fördervorrichtung 1100 gezeigt. Zu sehen ist ein Antriebsgestell 1011, mit drei in vertikaler Richtung übereinander angeordneten Lagern 1014a, b, c zur Lagerung von drei ebenfalls vertikal übereinander angeordneten Bandantrieben, die zum Antreiben von drei ebenfalls vertikal übereinander angeordneten Förderbändern dienen. An Lagern 1015a, b, c sind Andruckrollen gelagert, welche das Förderband der jeweiligen Etage an die jeweilige Antriebsrolle pressen, um die Antriebsleistung auf das Förderband zu übertragen. In Figur 5 ist nur das oberste dieser drei Förderbänder der drei-etagig ausgebildeten Fördervorrichtung 1100 dargestellt.

Das Förderband 1300 ist als Endlosförderband mit einem Obertrum 1300a und einem Untertrum 1300b ausgebildet. Das Obertrum 1300a ist mit tierischen Produkten, hier Kot 1200, beladen, wobei das Förderband 1300 durch den Bandantrieb derart angetrieben wird, dass der Kot 1200 in eine Förderrichtung FR gefördert werden kann. Das Förderband 1300 wird von Andruckrollen, die am Lager 1015a gelagert sind, auf die Antriebsrolle angepresst, um über die dadurch entstehende Reibung in der Förderrichtung FR angetrieben zu werden.

Das Lager 1014a ist mit einem Kettenrad 1016a verbunden, welches über eine Kette von einem Motor angetrieben werden kann und damit ein Drehmoment M_{b} auf den Bandantrieb übertragen wird, der damit das Förderband 1300 in Förderrichtung FR antreibt.

Als Maß für die Beladung des Förderbandes 1300 mit tierischen Produkten, hier Kot 1200, wird in der Ausgestaltung nach Figur 5 eine Motorstromüberwachung eingesetzt, d. h. mittels einer Strommessvorrichtung 1130 wird der aufgenommene Strom des Antriebsmotors 1110 in der Zuleitung 1120 ermittelt. Aus diesem aufgenommenen Motorstrom kann das Drehmoment M_{b} bestimmt werden, welches benötigt wird, um das Förderband 1300 zu bewegen. Mit zunehmender Beladung des Förderbandes 1300 steigt das für den Antrieb des Förderbandes 1300 erforderliche Drehmoment M_{b} und damit der aufgenommene Motorstrom. Wenn die Kennlinie des Antriebsmotors 1110 bekannt ist, kann aus dem aktuell aus dem Motorstrom aufgenommenen erforderlichen Drehmoment die Differenz zu einem Maximaldrehmoment ermittelt werden und aus dieser Differenz, gegebenenfalls mit einem Sicherheitsabschlag, eine maximal möglicher Zuladung ermittelt werden, mit der das Förderband 1300 zusätzlich beladen werden kann, und gleichzeitig ein zuverlässiger Antrieb des Förderbandes durch den Bandantrieb sichergestellt werden kann. Wenn das Maximaldrehmoment überschritten wird, kommt es zu einem Stillstand des Förderbandes 1300 mit den entsprechenden Nachteilen.

Vorzugsweise wird eine Warnmeldung ausgegeben, wenn sich das aktuell erforderliche Drehmoment, welches aus dem aktuell aufgenommen Motorstrom ermittelt werden kann, einen vorbestimmten Abstand zum Maximaldrehmoment unterschreitet, so dass die auf den Förderband 1300 befindlichen tierischen Produkte 1200 abtransportiert werden können, bevor es zu einer Überladung des Förderbandes 1300 kommt.

Insbesondere ist es bevorzugt, die Messung der Stromaufnahme in einer Strommessvorrichtung 1130 mit einem Förderbandfortschrittsdetektor, z. B. einem Drehzahlwächter beispielsweise an einer Umlenkrolle oder einem separaten Messrad auf dem Förderband 1300 zu kombinieren, um zu gewährleisten, dass Schlupf erkannt werden kann. Beginnender Schlupf zeigt an, dass die ermittelte Stromaufnahme kein direktes Maß für die auf das Förderband wirkende Antriebsleistung bzw. Zugkraft mehr ist, sondern bereits eine, ggf. auch zunächst geringe, Überladung eingetreten ist.

Eine weitere Möglichkeit, die Zugkraft des Förderbandes zu ermitteln, besteht beispielsweise darin, einen oder mehrere Dehnungsmessstreifen beispielsweise zwischen der Lagerung einer Antriebsrolle des Bandantriebs und dem abstützenden Seiten- bzw. Antriebsgestell 1011 anzuordnen, um so direkt die dort wirkenden Zugkräfte zu ermitteln.

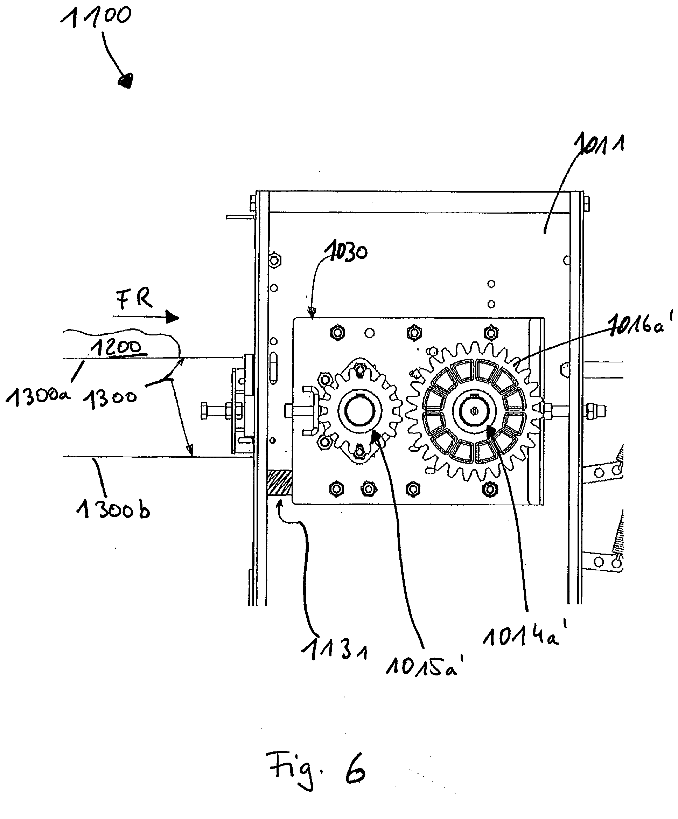

Eine weitere Möglichkeit der Ausgestaltung einer erfindungsgemäßen Fördervorrichtung 1100 ist in Figur 6 dargestellt. Figur 6 zeigt eine Ausgestaltung einer Fördervorrichtung 1100 ähnlich zu der zuvor beschriebenen. Die zuvor beschriebene Fördervorrichtung 1100 weist eine automatisierte Förderbandsteuerung auf, die einen störungsfreien Geradeauslauf der Förderbänder steuert. Sowohl die Andruckrollen als auch die Antriebsrolle sind dabei über eine Verstellplatte 1030 horizontal verschieblich in und entgegen der Förderrichtung FR über die Lager 1015a' und 1014a' gelagert. Die Verstellplatte 1030 ist vorzugsweise mit einem Stellmotor bzw. einer Korrekturvorrichtung verbunden, um die Verstellplatte 1030 mit den Lagern 1014a', 1015a' horizontal verschieben zu können.

Als Maß für die Beladung des Förderbandes kann gemäß der Ausführung von Figur 6 eine Lagerreaktion des Lagers 1014a' des Bandantriebs verwendet werden, wobei die zugehörige Messeinrichtung 1131 vorzugsweise als Kraftsensor ausgebildet ist, der in Figur 6 an einem Lager 1014a' einer Antriebsrolle des Bandantriebs angeordnet ist, und zwar indirekt über die Verstellplatte 1030. Da sich auf beiden Seiten der Fördervorrichtung ein Seiten- bzw. Antriebsgestell 1011 mit jeweils einer Verstellplatte 1030 und entsprechenden Lagern 1014a', 1015a' für die Antriebsrolle und die Andruckrollen befindet, kann in den jeweiligen Kraftsensoren 1131 jeweils eine Kraft ermittelt werden, die der Hälfte der Zugkraft F_{z} des Förderbandes 1300 entspricht. Die resultierende Zugkraft des Förderbandes 1300 tritt somit, um den Faktor 2 dividiert, an den Lagern 1014a' der Antriebsrolle des Bandantriebs auf und kann über die Kraftsensoren 1131 aufgenommen werden. In einer Steuervorrichtung (nicht dargestellt) können die von den Kraftsensoren 1131 ermittelten Werte ausgewertet werden, um einen Rückschluss auf die Beladung des Förderbandes 1300 mit tierischen Produkten zu ermöglichen.

Alternativ können die zu ermittelnden Zugkräfte auch über einen Dehnungsmessstreifen am Stellmotor der Verstellplatte 1030 abgegriffen werden. Auch hierbei ist die Verbindung mit einem Förderbandfortschrittsdetektor bevorzugt. Auf diese Weise lassen sich zuverlässig die aktuell wirkenden Zugkräfte ermitteln und in einer Steuervorrichtung weiterverarbeiten, um ein Maß für die Beladung des Förderbandes zu ermitteln und damit die oben beschriebenen Vorteile zu verwirklichen.

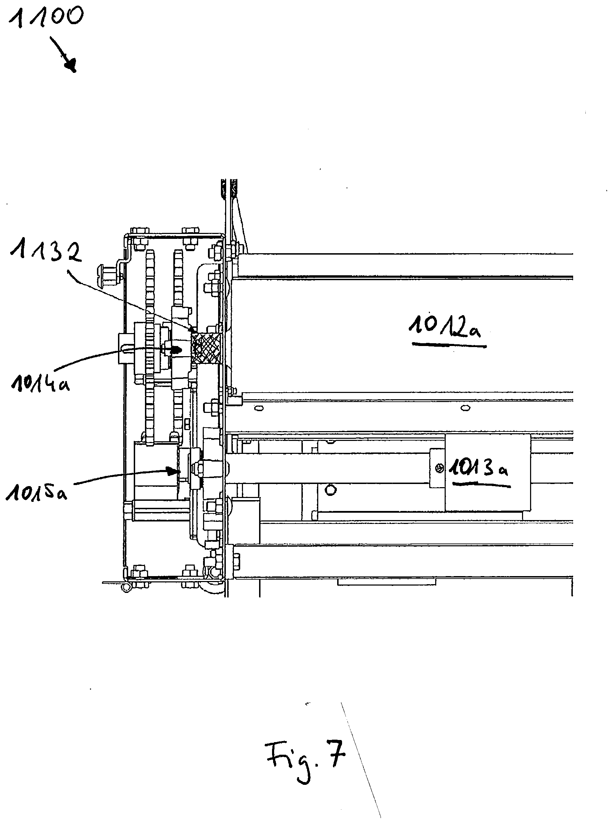

In Figur 7 ist eine weitere Möglichkeit zur Ausgestaltung einer erfindungsgemäßen Fördervorrichtung 1100 dargestellt. In der Teilansicht von Figur 7 ist die am Lager 1014a gelagerte Antriebsrolle 1012a sowie eine am Lager 1015a gelagerte Antriebsrolle 1013a zu erkennen. In der in Figur 7 dargestellten Variante wird als Maß für die Beladung des Förderbandes ein Drehmoment verwendet, wobei die Messeinrichtung als Dehnungsmessstreifen 1132 ausgebildet ist, der an einem Achszapfen der Antriebsrolle 1012a des Bandantriebs angeordnet ist.

Auch bei dieser Variante können die die oben genannten Auswertemöglichkeiten mit den ebenfalls bereits beschriebenen Vorteilen anschließen.

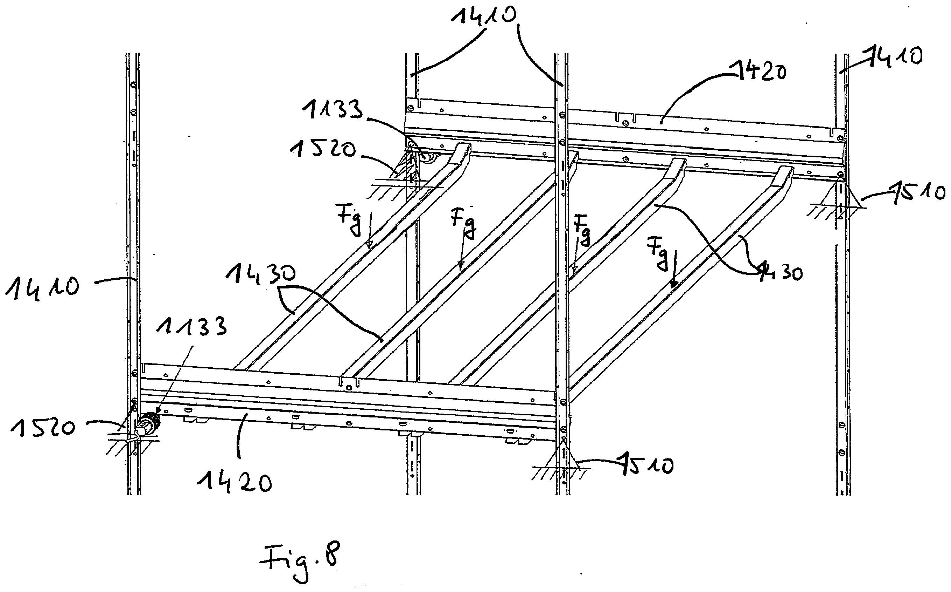

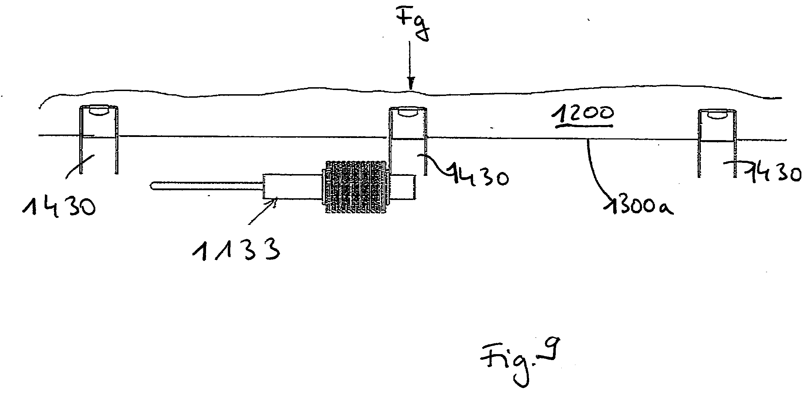

In den Figuren 8 und 9 sind Varianten dargestellt, bei denen als Maß für die Beladung des Förderbandes ein Gewicht der auf einem Abschnitt des Förderbandes befindlichen tierischen Produkte verwendet wird. Die Messeinrichtung ist dabei als Wägezelle 1133 ausgebildet. In Figur 8 sind zwei Förderbandseitenlagerungen 1420 an vertikalen Ständern 1410 über Festlager 1510 bzw. über Loslager 1520 befestigt. An den Förderbandseitenlagerungen 1420 sind wiederum Förderbandunterzüge 1430 befestigt, auf denen das Förderband (in Fig. 8 nicht dargestellt) läuft. Auf die Förderbandunterzüge 1430 wirkt die Gewichtskraft der auf dem Obertrum des Förderbandes zu befördernden tierischen Produkte F_{g}. Über die Befestigung der Förderbandunterzügen 1430 an den Förderbandseitenlagerungen 1420 wird diese Gewichtskraft F_{g} auf die Loslager 1520 übertragen, an denen jeweils eine Wägezelle 1133 angeordnet ist, welche die entsprechenden Gewichtskräfte aufnehmen kann.

Bei der in Figur 9 dargestellten Variante ist eine, bzw. vorzugsweise zwei Wägezellen 1133 unter mindestens einem der Unterzüge 1430 angeordnet, die dort direkt die Gewichtskraft F_{g} aufnehmen können.

Auch hier erfolgt nach Aufnahme des Gewichts als Maß für die Beladung des Förderbandes eine weitere Auswertung und weitere Verarbeitung vorzugsweise in einer nicht dargestellten Steuervorrichtung auf die oben beschriebene Weise mit den ebenfalls beschriebenen Vorteilen.

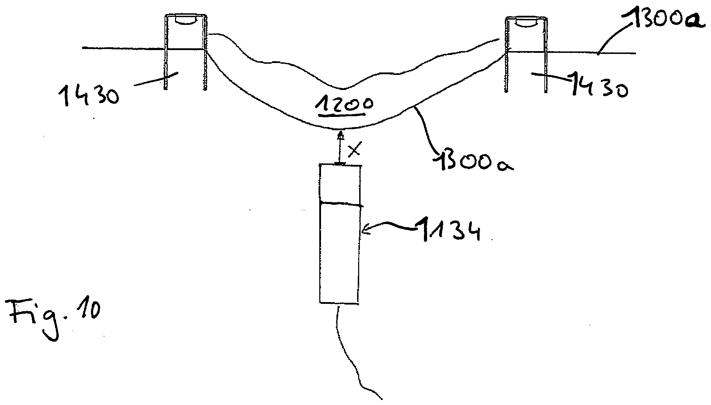

In Figur 10 ist eine weitere Variante dargestellt, bei der als Maß für die Beladung des Förderbandes eine Abweichung in vertikaler Richtung einer Lage eines Abschnitts des Förderbandes 1300, insbesondere des Obertrums 1300a, zwischen zwei Förderbandträgern, hier Förderbandunterzügen 1430, von einer Initiallage verwendet wird. Die Messeinrichtung ist in der in Figur 10 dargestellten Variante als Abstandssensor 1134 ausgebildet, der in vertikaler Richtung unterhalb des Untertrums 1300a des Förderbandes zwischen zwei Förderbandträgern, hier Förderbandunterzügen 1430, angeordnet ist. Die Initiallage des Untertrums 1300a des Förderbandes ist in Figur 10 rechts und links neben den Förderbandunterzügen 1430 zu erkennen. Der Abstandssensor 1134 misst zwischen den beiden Förderbandunterzügen 1430 jedoch nur noch einen Abstand X zum Untertrum 1300a des Förderbandes in der Mitte zwischen den beiden Förderbandunterzügen 1430. Verglichen mit der rechts und links von den Förderbandunterzügen 1430 zu erkennenden Initiallage des Obertrums 1300a des Förderbandes besteht somit zwischen den Unterzügen 1430 eine Abweichung in vertikaler Richtung der Lage des Abschnitts des Förderbandes von dieser Initiallage. Diese Abweichung kann auch als Durchhang bezeichnet werden. Mit zunehmender Beladung des Förderbandes mit tierischen Produkten 1200 nimmt dieser Durchhang zu, d. h. der vom Abstandssensor 1134 gemessene Abstand x bis zum Obertrum 1300a des Förderbandes nimmt ab.

Auch für diese Variante können nach Ermittlung des Maßes für die Beladung des Förderbandes, hier die Lageabweichung, die beschriebenen Auswertungs- und weiteren Verarbeitungsschritte erfolgen, wie beispielsweise Ausgabe von Warnmeldungen und/oder Berechnungen weiterer möglicher maximalen Zuladungen, Zuladungsraten und/oder Zuladungszeiten. Durch diese Auswertungen und weitergehenden Verarbeitungsschritte können einem Landwirt oder Betreibern von landwirtschaftlichen Betrieben und den dort tätigen Mitarbeitern Maßnahmen ermöglicht werden, die einer Überladung eines Förderbandes frühzeitig entgegenwirken und diese verhindern können. Auf diese Weise können nachteilige Situationen mit beladenen, aber nicht mehr förderfähigen Förderbändern vermieden bzw. verringert werden.

## Patentansprüche

1. Fördervorrichtung zum Fördern von tierischen Produkten in einem landwirtschaftlichen Betrieb, umfassend
- ein Förderband,
- einen Bandantrieb (12a,b,c) zum Antreiben des Förderbands in mindestens einer Förderrichtung,
- einen Sensor (40) zur Erfassung einer Abweichung einer Lage einer Kante des Förderbands, der ausgebildet und angeordnet ist, ein Abweichungssignal auszugeben, wenn die Lage der Kante des Förderbands um einen vorbestimmten Wert von einer Soll-Lage abweicht,
- eine Korrekturvorrichtung (20), die ausgebildet und angeordnet ist, in Abhängigkeit eines Korrektursignals die Ausrichtung des Bandantriebs (12a,b,c) zu verändern, **gekennzeichnet durch**:
- eine Messeinrichtung (1130, 1131, 1132, 1133, 1134), die ausgebildet und angeordnet ist, ein Maß für eine Beladung des Förderbandes zu ermitteln,
- eine Steuerungsvorrichtung, die ausgebildet ist, in Abhängigkeit von dem Abweichungssignal ein Korrektursignal zu generieren und an die Korrekturvorrichtung (20) auszugeben, und die ferner ausgebildet ist, das ermittelte Maß für die Beladung des Förderbandes (1300) mit einem Sollwert zu vergleichen,
- einen zweiten Sensor (40) zur Erfassung einer Abweichung einer Lage einer weiteren Kante des Förderbands, der ausgebildet und angeordnet ist, ein Abweichungssignal auszugeben, wenn die Lage der weiteren Kante des Förderbands um einen vorbestimmten Wert von einer Soll-Lage abweicht, wobei die Steuerungsvorrichtung ausgebildet ist, in Abhängigkeit davon, welcher der beiden Sensoren ein Abweichungssignal ausgibt, die Ausrichtung des Bandantriebs (12a,b,c) in eine erste oder eine von der ersten entgegengesetzten zweiten Richtung zu verändern.

2. Fördervorrichtung nach dem vorhergehenden Anspruch,
**dadurch gekennzeichnet, dass** der Bandantrieb (12a,b,c) als beidseitig gelagerte, angetriebene Antriebsrolle ausgebildet ist und die Korrekturvorrichtung (20) ausgebildet und angeordnet ist, die Ausrichtung des Bandantriebs (12a,b,c) über eine Positionsveränderung, insbesondere eine horizontale Verschiebung in oder entgegen der Förderrichtung, eines Lagers (14a) des Bandantriebs (12a) zu verändern.

3. Fördervorrichtung nach einem der vorhergehenden Ansprüche,
**dadurch gekennzeichnet, dass** jeder Sensor (40) als optischer, akustischer, mechanischer, kapazitiver oder induktiver Sensor ausgebildet ist, und/oder der Sensor (40) ausgebildet ist, ein digitales oder ein analoges Abweichungssignal auszugeben.

4. Fördervorrichtung nach einem der vorhergehenden Ansprüche,
**dadurch gekennzeichnet, dass** jeder Sensor (40) derart angeordnet ist, dass eine Detektionsfläche (43) des Sensors geneigt angeordnet ist.

5. Fördervorrichtung nach einem der vorhergehenden Ansprüche,
**dadurch gekennzeichnet, dass** die Korrekturvorrichtung (20) ausgebildet ist, pro Korrektursignal die Ausrichtung des Bandantriebs (12a,b,c) um einen vorbestimmten Wert in einer ersten und/oder einer zweiten, zur ersten entgegengesetzten Richtung zu verändern, und/oder **gekennzeichnet durch** eine Begrenzung des maximalen Veränderung der Ausrichtung des Bandantriebs (12a,b,c) in einer ersten und/oder einer zweiten, zur ersten entgegengesetzten Richtung.

6. Fördervorrichtung nach einem der vorhergehenden Ansprüche,
**dadurch gekennzeichnet, dass** jeder Sensor (40) derart beabstandet von der Soll-Lage der Kante angeordnet ist, dass das Abweichungssignal generiert wird, wenn der Sensor das Eintreten der Kante des Förderbandes in einen Detektionsbereich detektiert, oder dass jeder Sensor (40) derart angeordnet ist, dass das Abweichungssignal generiert wird, wenn der Sensor (40) das Austreten der Kante des Förderbandes aus einen Detektionsbereich detektiert.

7. Fördervorrichtung nach einem der vorhergehenden Ansprüche,
wobei die Steuerungsvorrichtung ausgebildet ist, eine Fehlermeldung auszugeben, wenn der erste und der zweite Sensor (40) ein Abweichungssignal ausgeben.

8. Fördervorrichtung nach einem der vorhergehenden Ansprüche,
**dadurch gekennzeichnet, dass** zwei, drei oder mehrere Förderbänder mit jeweils einem Bandantrieb (12a,b,c), Sensoren (40) und einer Korrekturvorrichtung (20) vorgesehen sind, wobei die zwei, drei oder mehreren Förderbänder vorzugsweise vertikal übereinander und/oder horizontal versetzt zueinander angeordnet sind.

9. Fördervorrichtung nach einem der vorhergehenden Ansprüche,
**dadurch gekennzeichnet, dass** die
- Steuervorrichtung ausgebildet ist, eine Warnmeldung zu generieren, wenn ein vorbestimmter Abstand zu dem Sollwert über- oder unterschritten wird;
wobei vorzugsweise die Messeinrichtung (1130, 1131, 1132, 1133, 1134) ausgebildet ist, das Maß für die Beladung des Förderbandes (1300) wiederholt zu ermitteln, beispielsweise in regelmäßigen Abständen und/oder ereignisgesteuert und/oder benutzerinitiiert.

10. Fördervorrichtung (1100) nach dem vorhergehenden Anspruch,
**dadurch gekennzeichnet, dass** die Steuervorrichtung ausgebildet ist, das ermittelte Maß für die Beladung des Förderbandes (1300) mit einem Maximalbeladungswert zu vergleichen und einen durch den Vergleich ermittelten Differenzwert auszugeben, wobei vorzugsweise die Steuervorrichtung ausgebildet ist,
- einen maximalen Zusatzbeladungszeitraum aus dem Differenzwert und einem Beladungswert pro Zeit zu ermitteln; und/oder
- einen maximalen Beladungswert pro Zeit aus dem Differenzwert und einem Zusatzbeladungszeitraum zu ermitteln.

11. Fördervorrichtung nach einem der beiden vorhergehenden Ansprüche,
**dadurch gekennzeichnet, dass** die Steuervorrichtung ausgebildet ist, das ermittelte Maß im Zeitverlauf zu speichern und vorzugsweise ein durchschnittliches Maß für eine Beladung des Förderbandes (1300) pro Zeiteinheit, vorzugsweise in einem bestimmten Zeitraum, abzuleiten.

12. Fördervorrichtung nach einem der vorhergehenden Ansprüche 9-11,
**dadurch gekennzeichnet, dass** das Maß für die Beladung des Förderbandes (300) mindestens eines aus der folgenden Gruppe ist:
- ein Leistungswert des Bandantriebs, insbesondere eine Stromaufnahme und/oder ein Drehmoment des Bandantriebs;
- eine dehnende Verformung eines Elements der Fördervorrichtung;
- eine auf ein Element der Fördervorrichtung wirkende Kraft, insbesondere Druck- und/oder Zugkraft;
- eine Lagerreaktion eines Lagers des Bandantriebs;
- ein Gewicht der auf einem Abschnitt des Förderbandes befindlichen tierischen Produkte (1200);
- eine Abweichung, insbesondere in vertikaler Richtung, einer Lage eines Abschnitts des Förderbandes von einer Initiallage;
- ein Förderbandfortschritt, insbesondere eine Förderbandgeschwindigkeit.

13. Fördervorrichtung nach einem der vorhergehenden Ansprüche 9-12,
**dadurch gekennzeichnet, dass** die Messeinrichtung ausgebildet ist als
- Kraftsensor (1131), insbesondere Drucksensor und/oder Zugsensor, beispielsweise Wägezelle (1133) und/oder Dehnungsmessstreifen;
- Drehmomentsensor, beispielsweise Dehnungsmessstreifen (1132);
- Strommessvorrichtung (1130);
- Abstandssensor (1134); und/oder
- Förderbandfortschrittsdetektor, insbesondere Drehzahlwächter und/oder Messrad.

14. Antriebsvorrichtung für eine Fördervorrichtung nach einem der vorhergehenden Ansprüche, umfassend
- einen Bandantrieb (12a,b,c) zum Antreiben eines Förderbands in einer Förderrichtung,
- eine Korrekturvorrichtung (20), die ausgebildet und angeordnet ist, in Abhängigkeit eines Korrektursignals die Ausrichtung des Bandantriebs (12a,b,c) zu verändern,
- eine Messeinrichtung (1130, 1131, 1132, 1133, 1134), die ausgebildet und angeordnet ist, ein Maß für eine Beladung des Förderbandes zu ermitteln, und
- eine Steuerungsvorrichtung, die ausgebildet ist,
o ein Abweichungssignal von einem ersten Sensor zur Erfassung einer Abweichung einer Lage einer Kante des Förderbands und von einem zweiten Sensor zur Erfassung einer Abweichung einer Lage einer weiteren Kante des Förderbands zu empfangen,
o in Abhängigkeit von einem Abweichungssignal ein Korrektursignal zu generieren und an die Korrekturvorrichtung (20) auszugeben, und die ferner ausgebildet ist, das ermittelte Maß für die Beladung des Förderbandes (1300) mit einem Sollwert zu vergleichen,
- wobei die Steuerungsvorrichtung ausgebildet ist, in Abhängigkeit davon, von welchem der beiden Sensoren ein Abweichungssignal empfangen wird, die Ausrichtung des Bandantriebs (12a,b,c) in eine erste oder eine von der ersten entgegengesetzten zweiten Richtung zu verändern.

15. Verfahren zum Fördern von tierischen Produkten in einem landwirtschaftlichen Betrieb mittels einer Fördervorrichtung, insbesondere eine Fördervorrichtung nach einem der vorhergehenden Ansprüche 1-13,
umfassend die Schritte:
- Antreiben eines Förderbands in mindestens einer Förderrichtung mittels eines Bandantriebs (12a,b,c),
- Erfassung einer Abweichung einer ersten Lage einer Kante des Förderbands mittels eines Sensors,
- Erfassung einer Abweichung einer Lage einer weiteren Kante des Förderbands mittels eines zweiten Sensors,
- Ausgeben eines Abweichungssignals, wenn die Lage der ersten Kante des Förderbands um einen vorbestimmten Wert von einer Soll-Lage abweicht,
- Ausgeben eines Abweichungssignals, wenn die Lage der weiteren Kante des Förderbands um einen vorbestimmten Wert von einer Soll-Lage abweicht,
- Ermitteln eines Korrektursignals in Abhängigkeit von dem Abweichungssignal mittels einer Steuerungsvorrichtung,
- Ausgeben des Korrektursignals an eine Korrekturvorrichtung (20),
- Verändern der Ausrichtung des Bandantriebs (12a,b,c) in Abhängigkeit eines Korrektursignals mittels der Korrekturvorrichtung (20),
ferner umfassend die Schritte:
- Ermitteln eines Maßes für eine Beladung des Förderbandes mittels einer Messeinrichtung (1130, 1131, 1132, 1133, 1134);
- Vergleichen des ermittelten Maßes für die Beladung des Förderbandes (1300) mit einem Sollwert.

## Claims

1. Conveying device for conveying animal products in an agricultural business, comprising
- a conveyor belt,
- a belt drive (12a,b,c) for driving the conveyor belt in at least one conveying direction,
- a sensor (40) for detecting a deviation of a position of an edge of the conveyor belt, which sensor is configured and arranged to output a deviation signal if the position of the edge of the conveyor belt deviates from a target position by a predetermined amount,
- a correction device (20), which is configured and arranged to change the orientation of the belt drive (12a,b,c) as a function of a correction signal,
**characterised by**: .
- a measurement means (1130, 1131, 1132, 1133, 1134), which is configured and arranged to determine a measure of a load on the conveyor belt,
- a control device, which is configured to generate a correction signal as a function of the deviation signal and pass it to the correction device (20), and which is further configured to compare the determined measure of the load on the conveyor belt (1300) with a target value,
- a second sensor (40) for detecting a deviation of a position of a further edge of the conveyor belt, which sensor is configured and arranged to output a deviation signal if the position of the further edge of the conveyor belt deviates from a target position by a predetermined amount, the control device being configured to change the orientation of the belt drive (12a,b,c) in a first direction or in a second direction counter to the first direction depending on which of the two sensors outputs a deviation signal.

2. Conveying device according to the preceding claim,
**characterised in that** the belt drive (12a,b,c) is configured as a driven drive roller mounted on both sides, and the correction device (20) is configured and arranged to change the orientation of the belt drive (12a,b,c) by way of a change in position, in particular a horizontal displacement in or counter to the conveying direction, of a mounting (14a) of the belt drive (12a).

3. Conveying device according to any of the preceding claims,
**characterised in that** each sensor (40) is configured as an optical, acoustic, mechanical, capacitive or inductive sensor, and/or the sensor (40) is configured to output a digital or an analogue deviation signal.

4. Conveying device according to any of the preceding claims,
**characterised in that** each sensor (40) is arranged in such a way that a detection surface (43) of the sensor is arranged inclined.

5. Conveying device according to any of the preceding claims,
**characterised in that** the correction device (20) is configured to change the orientation of the belt drive (12a,b,c) by a predetermined value in a first direction and/or in a second direction counter to the first direction for each correction signal, and/or **characterised by** a limit on the maximum change in the orientation of the belt drive (12a,b,c) in a first direction and/or in a second direction counter to the first direction.

6. Conveying device according to any of the preceding claims,
**characterised in that** each sensor (40) is arranged at a distance from the target position of the edge in such a way that the deviation signal is generated if the sensor detects the edge of the conveyor belt entering a detection region, or **in that** each sensor (40) is arranged in such a way that the deviation signal is generated if the sensor (40) detects the edge of the conveyor belt leaving a detection region.

7. Conveying device according to any of the preceding claims,
wherein the control device is configured to output an error message if the first and the second sensor (40) output a deviation signal.

8. Conveying device according to any of the preceding claims,
**characterised in that** two, three or a plurality of conveyor belts are provided, each comprising a belt drive (12a,b,c), sensors (40) and a correction device (20), the two, three or plurality of conveyor belts preferably being arranged vertically above one another and/or horizontally offset from one another.

9. Conveying device according to any of the preceding claims,
**characterised in that** the
- control device is configured to generate a warning message if a predetermined distance from the target value is overshot or undershot;
the measurement means (1130, 1131, 1132, 1133, 1134) preferably being configured to determine the measure of the load on the conveyor belt (1300) repeatedly, for example at regular intervals and/or in an event-controlled manner and/or in a user-initiated manner.

10. Conveying device (1100) according to the preceding claim,
**characterised in that** the control device is configured to compare the determined measure of the load on the conveyor belt (1300) with a maximum load value and to output a difference value determined by way of the comparison, the control device preferably being configured
- to determine a maximum additional loading time period from the difference value and a loading value per unit time; and/or
- to determine a maximum loading value per unit time from the difference value and an additional loading time period.

11. Conveying device according to either of the two preceding claims,
**characterised in that** the control device is configured to store the determined measure over time and preferably to derive an average measure of a load on the conveyor belt (1300) per unit time, preferably within a particular time period.

12. Conveying device according to any of the preceding claims 9 - 11,
**characterised in that** the measure of the load on the conveyor belt (300) is at least one of the following group:
- a performance value of the belt drive, in particular a current consumption and/or a torque of the belt drive;
- an expansion deformation of an element of the conveying device;
- a force, in particular compressive and/or tensile force, acting on an element of the conveying device;
- a mounting reaction of a mounting of the belt drive;
- a weight of the animal products (1200) located on a portion of the conveyor belt;
- a deviation, in particular in the vertical direction, of a position of a portion of the conveyor belt from an initial position;
- a conveyor belt progression, in particular a conveyor belt speed.

13. Conveying device according to any of the preceding claims 9 - 12,
**characterised in that** the measurement means is configured as
- a force sensor (1131), in particular a compression sensor and/or tension sensor, for example a weighing cell (1133) and/or strain gauge;
- a torque sensor, for example a strain gauge (1132);
- a current measurement device (1130);
- a distance sensor (1134); and/or
- a conveyor belt progress detector, in particular a rotational speed monitor and/or measuring wheel.

14. Drive device for a conveying device according to any of the preceding claims, comprising
- a belt drive (12a,b,c) for driving a conveyor belt in a conveying direction,
- a correction device (20), which is configured and arranged to change the orientation of the belt drive (12a,b,c) as a function of a correction signal,
- a measurement means (1130, 1131, 1132, 1133, 1134), which is configured and arranged to determine a measure of a load on the conveyor belt, and
- a control device, which is configured
o to receive a deviation signal from a first sensor for determining a deviation of a position of an edge of the conveyor belt and from a second sensor for determining a deviation of a position of a further edge of the conveyor belt,
o to generate a correction signal as a function of the deviation signal and pass it to the correction device (20), and which is further configured to compare the determined measure of the load on the conveyor belt (1300) with a target value,
- wherein the control device is configured to change the orientation of the belt drive (12a,b,c) in a first direction or in a second direction counter to the first direction depending on which of the two sensors a deviation signal is received from.

15. Method for conveying animal products in an agricultural business by means of a conveying device, in particular a conveying device according to any of the preceding claims 1 - 13,
comprising the steps of:
- driving a conveyor belt in at least one conveying direction by means of a belt drive (12a,b,c),
- detecting a deviation in a first position of an edge of the conveyor belt by means of a sensor,
- detecting a deviation in a position of a further edge of the conveyor belt by means of a second sensor,
- outputting a deviation signal if the position of the first edge of the conveyor belt deviates from a target position by a predetermined amount,
- outputting a deviation signal if the position of the further edge of the conveyor belt deviates from a target position by a predetermined amount,
- determining a correction single as a function of the deviation signal by means of a control device,
- outputting the correction signal to a correction device (20),
- changing the orientation of the belt drive (12a,b,c) as a function of a correction signal by means of the correction device (20),
further comprising the steps of:
- determining a measure of a load on the conveyor belt by means of a measurement means (1130, 1131, 1132, 1133, 1134);
- comparing the determined measure of the load on the conveyor belt (1300) with a target value.

## Revendications

1. Dispositif de transport servant à transporter des produits animaliers dans une exploitation agricole, comprenant
- une bande transporteuse,
- un entraînement de bande (12a, b, c) servant à entraîner la bande transporteuse dans au moins une direction de transport,
- un capteur (40) servant à détecter un écart d'une position d'une arête de la bande transporteuse, lequel est réalisé et disposé pour émettre un signal d'écart quand la position de l'arête de la bande transporteuse s'écarte d'une position théorique d'une valeur prédéfinie,
- un dispositif de correction (20), qui est réalisé et disposé pour modifier selon un signal de correction l'orientation de l'entraînement de bande (12a, b, c),
**caractérisé par** :
- un système de mesure (1130, 1131, 1132, 1133, 1134), qui est réalisé et disposé afin de déterminer une mesure pour un chargement de la bande transporteuse,
- un dispositif de commande, qui est réalisé pour générer selon le signal d'écart un signal de correction et l'envoyer au dispositif de correction (20), et qui est en outre réalisé pour comparer la mesure déterminée pour le chargement de la bande transporteuse (1300) à une valeur théorique,
- un deuxième capteur (40) servant à détecter un écart d'une position d'une autre arête de la bande transporteuse, qui est réalisé et disposé pour envoyer un signal d'écart quand la position de l'autre arête de la bande transporteuse s'écarte d'une position théorique d'une valeur prédéfinie, dans lequel le dispositif de commande est réalisé pour modifier l'orientation de l'entraînement de bande (12a, b, c) dans une première direction ou dans une deuxième direction opposée à la première direction selon celui des deux capteurs qui envoie un signal d'écart,.

2. Dispositif de transport selon la revendication précédente,
**caractérisé en ce que** l'entraînement de bande (12a, b, c) est réalisé sous la forme d'un rouleau d'entraînement entraîné monté des deux côtés, et le dispositif de correction (20) est réalisé et disposé pour modifier l'orientation de la bande d'entraînement (12a, b, c) par l'intermédiaire d'une modification de position, en particulier d'un coulissement horizontal dans la direction de transport ou dans le sens opposé à cette dernière, d'un palier (14a) de l'entraînement de bande (12a).

3. Dispositif de transport selon l'une quelconque des revendications précédentes,
**caractérisé en ce que** chaque capteur (40) est réalisé sous la forme d'un capteur optique, acoustique, mécanique, capacitif ou inductif, et/ou le capteur (40) est réalisé pour envoyer un signal d'écart numérique ou analogique.

4. Dispositif de transport selon l'une quelconque des revendications précédentes,
**caractérisé en ce que** chaque capteur (40) est disposé de telle manière qu'une surface de détection (43) du capteur est disposée de manière inclinée.

5. Dispositif de transport selon l'une quelconque des revendications précédentes,
**caractérisé en ce que** le dispositif de correction (20) est réalisé pour modifier par signal de correction l'orientation de l'entraînement de bande (12a, b, c) d'une valeur prédéfinie dans une première direction et/ou dans une deuxième direction opposée à la première direction, et/ou **caractérisé par** une limitation de la modification maximale de l'orientation de l'entraînement de bande (12a, b, c) dans une première direction et/ou dans une deuxième direction opposée à la première direction.

6. Dispositif de transport selon l'une quelconque des revendications précédentes,
**caractérisé en ce que** chaque capteur (40) est disposé de telle manière à distance de la position théorique de l'arête que le signal d'écart est généré, quand le capteur détecte l'entrée de l'arête de la bande transporteuse dans une zone de détection, ou que chaque capteur (40) est disposé de telle manière que le signal d'écart est généré quand le capteur (40) détecte la sortie de l'arête de la bande transporteuse hors de la zone de détection.

7. Dispositif de transport selon l'une quelconque des revendications précédentes, dans lequel le dispositif de commande est réalisé afin d'envoyer une notification d'erreur quand le premier et le deuxième capteur (40) envoient un signal d'écart.

8. Dispositif de transport selon l'une quelconque des revendications précédentes,
**caractérisé en ce que** deux, trois ou plusieurs bandes transporteuses sont prévues avec respectivement un entraînement de bande (12a, b, c), des capteurs (40) et un dispositif de correction (20), dans lequel les deux, trois ou plusieurs bandes transporteuses sont disposées de préférence les unes sur les autres de manière verticale et/ou de manière décalée les unes par rapport aux autres de manière horizontale.

9. Dispositif de transport selon l'une quelconque des revendications précédentes,
**caractérisé en ce que**
- le dispositif de commande est réalisé pour générer une notification d'alerte quand une distance prédéfinie par rapport à la valeur théorique est dépassée par augmentation ou diminution ;
dans lequel de préférence le système de mesure (1130, 1131, 1132, 1133, 1134) est réalisé pour déterminer de manière répétée la mesure pour le chargement de la bande transporteuse (1300), par exemple à intervalles réguliers et/ou de manière commandée selon les événements et/ou de manière initiée par l'utilisateur.

10. Dispositif de transport (1100) selon la revendication précédente,
**caractérisé en ce que** le dispositif de commande est réalisé pour comparer la mesure déterminée pour le chargement de la bande transporteuse (1300) à une valeur de chargement maximale et pour envoyer une valeur de différence déterminée par la comparaison, dans lequel de préférence le dispositif de commande est réalisé pour,
- déterminer une période de chargement supplémentaire maximale à partir de la valeur de différence et d'une valeur de chargement par laps de temps ; et/ou
- déterminer une valeur de chargement maximale par laps de temps à partir de la valeur de différence et d'une période de chargement supplémentaire.

11. Dispositif de transport selon l'une quelconque des deux revendications précédentes,
**caractérisé en ce que** le dispositif de commande est réalisé pour mémoriser la mesure déterminée au cours du temps et de préférence pour déduire une mesure moyenne pour un chargement de la bande transporteuse (1300) par unité de temps, de préférence dans une période définie.

12. Dispositif de transport selon l'une quelconque des revendications précédentes 9 - 11,
**caractérisé en ce que** la mesure pour le chargement de la bande transporteuse (300) est au moins une mesure issue du groupe qui suit :
- une valeur de puissance de l'entraînement de bande, en particulier une consommation de courant et/ou un couple de rotation de l'entraînement de bande ;
- une déformation par allongement d'un élément du dispositif de transport ;
- une force agissant sur un élément du dispositif de transport, en particulier une force de pression et/ou une force de traction ;
- une réaction de palier d'un palier de l'entraînement de bande ;
- un poids des produits (1200) animaliers se trouvant sur un tronçon de la bande transporteuse ;
- un écart, en particulier dans une direction verticale, d'une position d'un tronçon de la bande transporteuse par rapport à une position initiale ;
- une progression de bande transporteuse, en particulier une vitesse de bande transporteuse.

13. Dispositif de transport selon l'une quelconque des revendications précédentes 9 - 12,
**caractérisé en ce que** le système de mesure est réalisé sous la forme
- d'un capteur de force (1131), en particulier d'un capteur de pression et/ou d'un capteur de traction, par exemple d'une cellule de pesée (1133) et/ou d'une jauge extensométrique ;
- d'un capteur de couple de rotation, par exemple d'une jauge extensométrique (1132) ;
- d'un dispositif de mesure de courant (1130) ;
- d'un capteur de distance (1134) ; et/ou
- d'un détecteur de progression de bande transporteuse, en particulier d'un relais tachymétrique et/ou d'une roue mesureuse.

14. Dispositif d'entraînement pour un dispositif de transport selon l'une quelconque des revendications précédentes, comprenant
- un entraînement de bande (12a, b, c) servant à entraîner une bande transporteuse dans une direction de transport,
- un dispositif de correction (20), qui est réalisé et disposé pour modifier selon un signal de correction l'orientation de l'entraînement de bande (12a, b, c),
- un système de mesure (1130, 1131, 1132, 1133, 1134), qui est réalisé et disposé pour déterminer une mesure pour un chargement de la bande transporteuse, et
- un dispositif de commande, qui est réalisé
-- pour recevoir un signal d'écart provenant d'un premier capteur servant à détecter un écart d'une position d'une arête de la bande transporteuse et provenant d'un deuxième capteur servant à détecter un écart d'une position d'une autre arête de la bande transporteuse,
-- générer, selon un signal d'écart, un signal de correction et l'envoyer au dispositif de correction (20), et qui est réalisé en outre pour comparer la mesure déterminée pour le chargement de la bande transporteuse (1300) à une valeur théorique,
- dans lequel le dispositif de commande est réalisé pour modifier l'orientation de l'entraînement de bande (12a, b, c) dans une première direction ou dans une deuxième direction opposée à la première direction selon celui des deux capteurs qui reçoit un signal d'écart.

15. Procédé servant à transporter des produits animaliers dans une exploitation agricole au moyen d'un dispositif de transport, en particulier un dispositif de transport selon l'une quelconque des revendications précédentes 1 - 13,
comprenant les étapes consistant à :
- entraîner une bande transporteuse dans au moins une direction de transport au moyen d'un entraînement de bande (12a, b, c),
- détecter un écart d'une première position d'une arête de la bande transporteuse au moyen d'un capteur,
- détecter un écart d'une position d'une autre arête de la bande transporteuse au moyen d'un deuxième capteur,
- envoyer un signal d'écart quand la position de la première arête de la bande transporteuse s'écarte d'une position théorique d'une valeur prédéfinie,
- envoyer un signal d'écart quand la position de l'autre arête de la bande transporteuse s'écarte d'une position théorique d'une valeur prédéfinie,
- déterminer un signal de correction selon le signal d'écart au moyen d'un dispositif de commande,
- envoyer le signal de correction à un dispositif de correction (20),
- modifier l'orientation de l'entraînement de bande (12a, b, c) selon un signal de correction au moyen du dispositif de correction (20),
comprenant en outre les étapes consistant à :
- déterminer une mesure pour un chargement de la bande transporteuse au moyen d'un système de mesure (1130, 1131, 1132, 1133, 1134) ;
- comparer la mesure déterminée pour le chargement de la bande transporteuse (1300) à une valeur théorique.
